# EUROPÄISCHE PATENTSCHRIFT

(11) **EP 2 843 267 B1**
(45) Veröffentlichungstag und Bekanntmachung des Hinweises auf die Patenterteilung: **08.05.2019**
(21) Anmeldenummer: 14179560.9
(22) Anmeldetag: 01.08.2014
(51) Int. Cl.: F16H 61/30, F16H 63/30, F15B 11/12

(54) **HYDRAULISCHER SCHALTAKTUATOR EINES MECHANISCHEN ZWEI-GANG-SCHALTGETRIEBES**
HYDRAULIC SHIFT ACTUATOR OF A MECHANICAL TWO GEAR TRANSMISSION
ACTIONNEUR DE COMMANDE HYDRAULIQUE D'UNE BOÎTE DE VITESSES MÉCANIQUE À DEUX RAPPORTS

(30) Priorität: 08.08.2013 DE 102013108595
(43) Veröffentlichungstag der Anmeldung: 04.03.2015
(73) Patentinhaber: Linde Hydraulics GmbH & Co. KG, 63743 Aschaffenburg (DE)
(72) Erfinder: Langen, Dr., Alfred, 63762 Großostheim (DE)
(74) Vertreter: Patentship Patentanwaltsgesellschaft mbH

(56) Entgegenhaltungen:
- EP-A1- 0 803 651
- DE-A1- 19 507 704
- DE-A1-102006 014 479
- DE-A1-102011 055 173
- DE-C1- 4 204 883
- JP-A- 2010 160 104
- US-A1- 2011 303 033

## Beschreibung

Die Erfindung betrifft einen hydraulischer Schaltaktuator eines Schaltgetriebes, insbesondere eines Stillstandsschaltgetriebes, der Schaltstellungen für eine erste Schaltstufe des Schaltgetriebes, für eine zweite Schaltstufe des Schaltgetriebes und für eine eine Leerlaufstellung bildende Neutralstellung des Schaltgetriebes aufweist, wobei der Schaltaktuator einen in einer Gehäusebohrung eines Gehäuses längsverschiebbaren Schaltkolben aufweist, der mit einer Kolbenstange und einem an der Kolbenstange angeordneten Kolbenabschnitt versehen ist, wobei an einer ersten Stirnseite des Kolbenabschnitts eine erste Steuerdruckfläche ausgebildet ist, die mit einem ersten Steuerdruckraum in Verbindung steht, wobei bei einem im ersten Steuerdruckraum anstehenden Steuerdruck der Schaltkolben in die Schaltstellung für die erste Schaltstufe betätigbar ist, und an einer zweiten Stirnseite des Kolbenabschnitts, die der ersten Stirnseite gegenüberliegt, eine zweite Steuerdruckfläche ausgebildet ist, die mit einem zweiten Steuerdruckraum in Verbindung steht, wobei bei einem im zweiten Steuerdruckraum anstehenden Steuerdruck der Schaltkolben in die Schaltstellung für die zweite Schaltstufe betätigbar ist, wobei zwei Stufenkolben vorgesehen sind, die koaxial zu der Kolbenstange des Schaltkolbens längsverschiebbar angeordnet sind und durch die die Kolbenstange des Schaltkolbens hindurchgeführt ist, wobei der erste Stufenkolben in dem ersten Steuerdruckraum längsverschiebbar angeordnet ist und eine von dem im ersten Steuerdruckraum anstehenden Steuerdruck beaufschlagte Steuerfläche aufweist, wobei der erste Stufenkolben mit einer inneren Stirnseite mit der ersten Stirnseite des Kolbenabschnitts des Schaltkolbens in Wirkverbindung bringbar ist, wobei der zweite Stufenkolben in dem zweiten Steuerdruckraum längsverschiebbar angeordnet ist und eine von dem im zweiten Steuerdruckraum anstehenden Steuerdruck beaufschlagte Steuerfläche aufweist, wobei der zweite Stufenkolben mit einer inneren Stirnseite mit der zweiten Stirnseite des Kolbenabschnitts des Schaltkolbens in Wirkverbindung bringbar ist, wobei zwischen einem Innendurchmesser des ersten Stufenkolbens und dem Außendurchmesser der Kolbenstange ein Ringspalt ausgebildet ist, über den die erste Stirnseite des Kolbenabschnitts des Schaltkolbens mit dem ersten Steuerdruckraum in Verbindung steht, und wobei zwischen einem Innendurchmesser des zweiten Stufenkolbens und dem Außendurchmesser der Kolbenstange ein Ringspalt ausgebildet ist, über den die zweite Stirnseite des Kolbenabschnitts des Schaltkolbens mit dem zweiten Steuerdruckraum in Verbindung steht, wobei an dem Gehäuse ein erster Anschlag für den ersten Stufenkolben, der den maximalen Hub des Schaltkolbens in der zweiten Schaltstufe begrenzt, und ein zweiter Anschlag für den zweiten Stufenkolben ausgebildet ist, der den maximalen Hub des Schaltkolbens in der ersten Schaltstufe begrenzt, wobei die Gehäusebohrung beiderseits des Kolbenabschnitts als Stufenbohrung ausgebildet ist, in der jeweils ein Stufenkolben längsverschiebbar angeordnet ist, wobei der Kolbenabschnitt des Schaltkolbens in einem im Durchmesser verringerten mittleren Abschnitt der Stufenbohrung angeordnet ist, der erste Stufenkolben mit einem im Durchmesser verringerten inneren Abschnitt, an dem die innere Stirnseite ausgebildet ist, in dem mittleren Abschnitt der Stufenbohrung und mit einem im Durchmesser vergrößerten äußeren Abschnitt in einem im Durchmesser vergrößerten äußeren Abschnitt der Stufenbohrung angeordnet ist, der den ersten Steuerdruckraum bildet, der zweite Stufenkolben mit einem im Durchmesser verringerten inneren Abschnitt, an dem die innere Stirnseite ausgebildet ist, in dem mittleren Abschnitt der Stufenbohrung und mit einem im Durchmesser vergrößerten äußeren Abschnitt in einem im Durchmesser vergrößerten äußeren Abschnitt der Stufenbohrung angeordnet ist, der den zweiten Streuerdruckraum bildet.

Ein gattungsgemäßer Schaltaktuator ist aus der DE 195 07 704 A1 bekannt.

Mechanische Zwei-Gang-Schaltgetriebe werden in mobilen Arbeitsmaschinen eingesetzt, insbesondere Landmaschinen, Forstmaschinen und Baumaschinen, beispielsweise Rad- und Teleskoplader, Bagger, Forstmaschinen, Schlepper, Mähdrescher, Feldhäcksler, Zuckerrüben- oder Kartoffelroder.

Aus Kostengründen oder wegen des einfachen und kompakten Aufbaus werden in mobilen Arbeitsmaschinen in der Regel als unsynchronisierte Stillstandschaltgetriebe ausgebildete Zwei-Gang-Schaltgetriebe eingesetzt. Bekannte als Stillstandschaltgetriebe ausgebildete Zwei-Gang-Schaltgetriebe werden mittels eines Schaltaktuators betätigt, der eine Stellung für die erste Schaltstufe (erster Gang) und eine Stellung für die zweite Schaltstufe (zweiter Gang) aufweist. Mit einem derartigen Schaltaktuator kann das Zwei-Gang-Stillstandsschaltgetriebe zwischen den beiden Schaltstufen und somit zwischen den beiden Gängen geschaltet werden. Da der Schaltaktuator lediglich zwei Stellungen für die beiden Schaltstufen aufweist, kann die Neutralstellung (Leerlaufstellung) des Schaltgetriebes nicht aktiv angesteuert werden. Bestimmte Anwendungsfälle, beispielsweise zum Abschleppen der Arbeitsmaschine, erfordern es jedoch, die Neutralstellung des Schaltgetriebes ansteuern zu können.

Sofern das Zwei-Gang-Schaltgetriebe von einem Hydromotor eines hydrostatischen Getriebes angetrieben ist, ist es bereits bekannt, das Zwei-Gang-Schaltgetriebe als einfach und kostengünstig aufgebautes unsynchronisiertes Stillstandsschaltgetriebe auszubilden, das während der Fahrt zwischen den Schaltstufen und somit den Gängen schaltbar ist. Zum Wechsel der Schaltstufen während der Fahrt wird hierzu das Zwei-Gang-Schaltgetriebe drehmomentfrei gemacht und anschließend in die Neutralstellung und somit die Leerlaufstellung betätigt wird. In der Neutralstellung des Schaltgetriebes kann über den Hydromotor eine elektrohydraulische Drehzahlsynchronisierung durchgeführt werden, um anschließend während der Fahrt die neue Schaltstufe am Schaltgetriebe einlegen zu können.

Ein derartiges, von einem Hydromotor angetriebenes Zwei-Gang-Schaltgetriebe, das als Stillstandschaltgetriebe ausgebildet ist und während der Fahrt der Gangwechsel zwischen den Schaltstufen durchgeführt werden kann, ist aus der DE 10 2011 055 173 A1. An dem Zwei-Gang-Schaltgetriebe ist für den Wechsel der Schaltstufen ein hydraulischer Schaltaktuator mit drei Schaltstellungen erforderlich, mit dem das Zwei-Gang-Schaltgetriebe in die erste Schaltstufe und die zweite Schaltstufe sowie aktiv in die Neutralstellung betätigt werden kann, um in der Neutralstellung des Schaltgetriebes während der Fahrt der Arbeitsmaschine die elektrohydraulische Drehzahlsynchronisierung durchführen zu können.

Der vorliegenden Erfindung liegt die Aufgabe zugrunde, einen hydraulischen Schaltaktuator eines mechanischen Zwei-Gang-Schaltgetriebes der eingangs genannten Gattung zur Verfügung zu stellen, mit dem bei einfachem Aufbau und sicherer Betriebsweise das Schaltgetriebe in die beiden Schaltstufen und aktiv in die Neutralstellung betätigt werden kann.

Diese Aufgabe wird erfindungsgemäß dadurch gelöst, dass das Schaltgetriebe ein mechanisches Zwei-Gang-Schaltgetriebe ist und der jeweilige Stufenkolben gegenüber dem mittleren Abschnitt der Stufenbohrung und gegenüber dem äußeren Abschnitt der Stufenbohrung abgedichtet ist. Bei einem entsprechenden an der ersten bzw. zweiten Steuerdruckfläche des Kolbenabschnitts des Schaltkolbens anstehenden Steuerdruck kann der Schaltaktuator in die Schaltstellung für die erste bzw. die zweite Schaltstufe betätigt werden. Sofern in beiden Steuerdruckräumen ein Steuerdruck ansteht, wird der Schaltkolbens mittels der beiden Stufenkolben aktiv in die Schaltstellung für die Neutralstellung betätigt. Die erfindungsgemäße hydraulische Schaltaktuator kann auf einfache Weise mit drei Schaltstellungen für die beiden Schaltstufen und die Neutralstellung des Schaltgetriebes versehen werden, da bei einer Druckbeaufschlagung des ersten Steuerdruckraums das Schaltgetriebe in die erste Schaltstufe betätigt wird, bei einer Druckbeaufschlagung des zweiten Steuerdruckraums das Schaltgetriebe in die zweite Schaltstufe betätigt wird und bei einer gleichzeitigen Druckbeaufschlagung beider Steuerdruckräume das Schaltgetriebe mittels der beiden Stufenkolben in die zwischen den beiden Schaltstufen angeordnete Neutralstellung beaufschlagt wird. Ein derartiger Schaltaktuator, der von dem Schaltkolben und auf dem Schaltkolben angeordneten Stufenkolben gebildet ist und drei Schaltstellungen für die beiden Schaltstufen sowie die Neutralstellung des Schaltgetriebes aufweist, weist einen einfachen Aufbau auf und ermöglicht es, die beiden Schaltstufen für die beiden Gänge des Schaltgetriebes und weiterhin die Neutralstellung des Schaltgetriebes aktiv anzusteuern. Über die Ringspalte zwischen den Stufenkolben und der Kolbenstange des Schaltkolbens kann auf einfache Weise erzielt werden, dass die entsprechende Steuerdruckfläche an dem Kolbenabschnitt mit dem zugeordneten Steuerdruckraum verbunden ist. Die mit den Stufenkolben zusammenwirkenden Anschläge am Gehäuse ermöglichen es auf einfache Weise, die Bewegung und Auslenkung des Schaltkolbens in der ersten Schaltstufe und in der zweiten Schaltstufe zu begrenzen, wodurch sich eine sichere Betriebsweise erzielen lässt. Die Ausbildung von Anschlägen am Gehäuse des Schaltaktuators, an dem die Stufenkolben anschlagen, ermöglicht es weiterhin auf einfache Weise, den maximalen Hub des Schaltkolbens an den erforderlichen Schaltweg des Schaltgetriebes für die Schaltstufen und somit die einzulegenden Gänge anzupassen. Die Gehäusebohrung ist beiderseits des Kolbenabschnitts als Stufenbohrung ausgebildet, in der jeweils ein Stufenkolben längsverschiebbar angeordnet ist, wobei der Kolbenabschnitt des Schaltkolbens in einem im Durchmesser verringerten mittleren Abschnitt der Stufenbohrung angeordnet ist, der erste Stufenkolben mit einem im Durchmesser verringerten inneren Abschnitt, an dem die innere Stirnseite ausgebildet ist, in dem mittleren Abschnitt der Stufenbohrung und mit einem im Durchmesser vergrößerten äußeren Abschnitt in einem im Durchmesser vergrößerten äußeren Abschnitt der Stufenbohrung angeordnet ist, der den ersten Steuerdruckraum bildet, der zweite Stufenkolben mit einem im Durchmesser verringerten inneren Abschnitt, an dem die innere Stirnseite ausgebildet ist, in dem mittleren Abschnitt der Stufenbohrung und mit einem im Durchmesser vergrößerten äußeren Abschnitt in einem im Durchmesser vergrößerten äußeren Abschnitt der Stufenbohrung angeordnet ist, der den zweiten Streuerdruckraum bildet. Hierdurch ist eine - in axialer Richtung des Schaltaktuators gesehen - bauraumsparende Ausführung des Schaltaktuators erzielbar, wobei auf einfache Weise ermöglicht wird, dass der in dem entsprechenden Steuerdruckraum anstehende Steuerdruck sowohl den im Steuerdruckraum angeordneten Stufenkolben beaufschlagt als auch an der entsprechenden Steuerdruckfläche des Kolbenabschnitts des Schaltkolbens ansteht. Der jeweilige Stufenkolben ist gegenüber dem mittleren Abschnitt der Stufenbohrung und gegenüber dem äußeren Abschnitt der Stufenbohrung abgedichtet. Hierdurch kann im Bereich des Stufenkolbens eine Abdichtung des Steuerdruckraums und des darin anstehenden Steuerdrucks erzielt werden.

Gemäß einer Weiterbildung der Erfindung ist an dem Gehäuse für jeden Stufenkolben ein Anschlag für die Neutralstellung ausgebildet, wobei bei einer Druckbeaufschlagung des ersten Steuerdruckraums mit einem Steuerdruck der erste Stufenkolben an einen dem ersten Stufenkolben zugeordneten Anschlag für die Neutralstellung betätigt wird und bei einer Druckbeaufschlagung des zweiten Steuerdruckraums mit einem Steuerdruck der zweite Stufenkolben an einen dem zweiten Stufenkolben zugeordneten Anschlag für die Neutralstellung betätigt wird. Der erfindungsgemäße Schaltaktuator kann somit auf einfache Weise in die Mittelstellung gezwungen werden, die der Neutralstellung des Schaltgetriebes entspricht, wenn bei einer Druckbeaufschlagung des ersten Steuerdruckraums mit einem Steuerdruck der erste Stufenkolben an den dem ersten Stufenkolben zugeordneten Anschlag für die Neutralstellung betätigt wird und bei einer Druckbeaufschlagung des zweiten Steuerdruckraums mit einem Steuerdruck der zweite Stufenkolben an den dem zweiten Stufenkolben zugeordneten Anschlag für die Neutralstellung betätigt wird. Bei dem erfindungsgemäßen Schaltaktuator sind somit die drei Schaltstellungen für die Neutralstellung und für die beiden Schaltstufen des Schaltgetriebes jeweils von mit den Stufenkolben zusammenwirkenden Anschlägen festgelegt. Hierdurch wird eine hohe Reproduzierbarkeit der Schaltstellungen erzielt. Bei dem erfindungsgemäßen Schaltaktuator können somit die Genauigkeit der Schaltstellungen störende Einflüsse vermieden werden, beispielsweise Temperatureinflüsse oder Langzeitdrift.

Besondere Vorteile ergeben sich, wenn gemäß einer Weiterbildung der Erfindung der erste Anschlag, der den maximalen Hub des Schaltkolbens in der zweiten Schaltstufe begrenzt, und der zweite Anschlag, der den maximalen Hub des Schaltkolbens in der ersten Schaltstufe begrenzt, anpassbar, insbesondere einstellbar, ist. Hierdurch kann der maximale Hub des Schaltkolbens auf einfache Weise eingestellt und an den erforderlichen Schaltweg des Schaltgetriebes bzw. bei unterschiedlichen Schaltgetrieben an die verschiedenen Schaltwege der Schaltgetriebe angepasst werden.

Die Anschläge der Stufenkolben für die Neutralstellung des Schaltaktuators können an den beiden Stufenkolben und den die Stufenkolben aufnehmenden Stufenbohrungen auf einfache Weise erzielt werden, wenn der dem ersten Stufenkolben zugeordnete Anschlag für die Neutralstellung zwischen einem Durchmesserabsatz der den ersten Stufenkolben aufnehmenden Stufenbohrung und einem Durchmesserabsatz des ersten Stufenkolbens gebildet ist und der dem zweiten Stufenkolben zugeordnete Anschlag für die Neutralstellung zwischen einem Durchmesserabsatz der den zweiten Stufenkolben aufnehmenden Stufenbohrung und einem Durchmesserabsatz des zweiten Stufenkolbens gebildet ist.

Gemäß einer vorteilhaften Weiterbildung der Erfindung ist vorgesehen, dass eine den ersten Stufenkolben in Richtung der ersten Stirnseite des Kolbenabschnitts des Schaltkolbens beaufschlagende erste Federeinrichtung und eine den zweiten Stufenkolben in Richtung der zweiten Stirnseite des Kolbenabschnitts des Schaltkolbens beaufschlagende zweite Federeinrichtung vorgesehen ist, wobei die Vorspannungen der Federeinrichtungen derart bemessen, dass die Stufenkolben in Anlage an dem Kolbenabschnitt des Schaltkolbens bzw. dem zugeordneten Anschlag für die Neutralstellung gehalten werden, die Federeinrichtungen den Schaltkolben jedoch nicht in die Schaltstellung für die Neutralstellung betätigen können. Mit den Federeinrichtungen wird somit ermöglicht, dass der Stufenkolben in Anlage an den Kolbenabschnitt des Schaltkolbens bzw. dem jeweiligen Anschlag für die Neutralstellung gehalten wird. Hierdurch ergeben sich Vorteile hinsichtlich kurzer Betätigungszeiten des Schaltaktuators. Zudem wird mittels der Federeinrichtung verhindert, dass bei einer Druckbeaufschlagung eines Steuerdruckraums des entsprechenden Stufenkolbens unter störenden Geräuschen in Anlage an den Kolbenabschnitt gelangt. Die geringe Vorspannung der Federeinrichtungen führt weiterhin dazu, dass die Federeinrichtung keine zentrierende Wirkung auf den Schaltkolben haben, so dass bei Abbau des Steuerdrucks in den beiden Steuerdruckräumen der Vorzustand und die Schaltstellung des Schaltaktuators erhalten bleibt und somit kein Schaltvorgang des Schaltgetriebes ausgelöst wird.

Zur Abdichtung des jeweiligen Stufenkolbens können gemäß einer zweckmäßigen Ausgestaltungsform der Erfindung entsprechende Dichtungseinrichtungen vorgesehen sein.

Gemäß einer alternativen Ausgestaltungsform der Erfindung erfolgt die Abdichtung des jeweiligen Stufenkolbens durch die Passungen zwischen dem Innendurchmesser der Stufenbohrung und dem Außendurchmesser des Stufenkolbens.

Sofern gemäß einer vorteilhaften Ausführungsform der Erfindung der Kolbenabschnitt gegenüber dem mittleren Abschnitt der Gehäusebohrung abgedichtet ist, kann auf einfache Weise eine Abdichtung in beiden Steuerdruckräume gegeneinander erzielt werden.

Der Schaltkolben kann gemäß einer Ausführungsform einteilig ausgeführt werden, wobei der Kolbenabschnitt einstückig an der Kolbenstange ausgebildet ist.

Alternativ ist eine mehrteilige Ausführung des Schaltkolbens möglich, wobei der Kolbenabschnitt an der Kolbenstange befestigt und gegenüber der Kolbenstange abgedichtet ist.

Um eine sichere Betätigung der Stufenkolben durch den in dem entsprechenden Steuerdruckraum anstehenden Steuerdruck zu erzielen, sind gemäß einer Weiterbildung der Erfindung ein erster Ringraum zwischen dem Durchmesserabsatz der Stufenbohrung und dem Durchmesserabsatz des ersten Stufenkolbens und ein zweiter Ringraum zwischen dem Durchmesserabsatz der Stufenbohrung und dem Durchmesserabsatz des zweiten Stufenkolbens zu einem Behälter entlastet.

Gemäß einer vorteilhaften Ausgestaltungsform der Erfindung ist der erste Steuerdruckraum mittels eines ersten Steuerventils mit einem Steuerdruck beaufschlagbar oder von dem Steuerdruck entlastbar ist und der zweite Steuerdruckraum mittels eines zweiten Steuerventils mit einem Steuerdruck beaufschlagbar oder von dem Steuerdruck entlastbar ist, wobei das erste Steuerventil und das zweite Steuerventil jeweils als elektrisch betätigtes Schaltventil oder als elektrisch betätigtes Proportionalventil oder als elektrisch betätigtes Druckregelventil ausgebildet ist. Mit derartigen elektrisch betätigbaren Steuerventilen kann der erfindungsgemäße hydraulische Schaltaktuator sicher in die Schaltstellungen für die erste Schaltstufe, die zweite Schaltstufe und die Neutralstellung des Schaltgetriebes betätigt werden. Die Ansteuerung des Schaltaktuators über elektrisch ansteuerbare Druckregelventile weist als weiteren Vorteil auf, dass auf einfache Weise die Schalkraft des Schaltaktuators dosiert werden kann.

Besondere Vorteile ergeben sich, wenn im nicht angesteuerten Zustand der von dem Steuerventil angesteuerte Steuerdruckraum zu einem Behälter entlastet ist und bei einer elektrischen Ansteuerung des jeweiligen Steuerventils ein in dem zugeordneten Steuerdruckraum anstehender Steuerdruck erzeugbar ist. Im nicht angesteuerten Zustand der beiden Steuerventile ist somit der Schaltaktuator an den beiden Steuerdruckräumen drucklos geschaltet. Hierdurch ergibt sich eine hohe Betriebssicherheit des Schaltaktuators, da die elektrisch betätigten Steuerventile nur kurzzeitig während eines Schaltvorgangs des Schaltgetriebes angesteuert werden müssen.

Gemäß einer alternativen Ausgestaltungsform der Erfindung kann die Ansteuerlogik der Steuerventile invertiert sein, wobei im nicht angesteuerten Zustand ein in dem zugeordneten Steuerdruckraum anstehender Steuerdruck erzeugbar ist und bei einer elektrischen Ansteuerung des jeweiligen Steuerventils der von dem Steuerventil angesteuerte Steuerdruckraum zu einem Behälter entlastbar ist. Im nicht angesteuerten Zustand der Steuerventile ist somit der Schaltaktuator von einem in dem Steuerdruckraum oder den beiden Steuerdruckräumen anstehenden Steuerdruck beaufschlagt.

Gemäß einer zweckmäßigen Weiterbildung der Erfindung ist der Schaltkolben oder ein mit dem Schaltkolben in mechanischer Wirkverbindung stehendes und von dem Schaltkolben betätigtes Schaltelement des Getriebes mit einer mechanischen Rasteinrichtung versehen, mit der der Schaltkolben in der Stellung für die Neutralstellung sowie in der Stellung für die erste Schaltstufe und in der Stellung für die zweite Schaltstufe arretierbar ist. Hierdurch ergeben sich besondere Vorteile, insbesondere in Verbindung mit elektrisch betätigten Steuerventilen, die im nicht angesteuerten Zustand die Steuerdruckräume zu dem Behälter entlasten, da der Schaltkolben mittels der mechanischen Rasteinrichtung in der Neutralstellung bzw. den Schaltstellungen für die entsprechende Schaltstufe gehalten und arretiert wird.

Zweckmäßigerweise weist die Rasteinrichtung ein federbelastetes Rastelement auf, das in nutartige Vertiefungen des Schaltkolbens oder des mit dem Schaltkolben in mechanischer Wirkverbindung stehenden und von dem Schaltkolben betätigten Schaltelements des Getriebes eingreift. Mit einer derartigen mechanischen Rasteinrichtung kann bei geringem Bauaufwand eine sichere Arretierung des Schaltkolbens erzielt werden.

Gemäß einer weiteren vorteilhaften Ausgestaltungsform der Erfindung ist in einer Steuerdruckversorgungsleitung der beiden Steuerventile ein elektrisch ansteuerbares Freigabeventil angeordnet. Sofern der Schaltaktuator mit keiner mechanischen Rasteinrichtung versehen ist, kann alternativ mit einem die Steuerdruckversorgungsleitung der beiden Steuerventile ansteuernden Freigabeventil eine hohe Betriebssicherheit erzielt werden. Sofern der Schaltaktuator mit keiner mechanischen Rasteinrichtung versehen ist, muss das entsprechende Steuerventil dauerhaft angesteuert werden, um den Schaltaktuator in der Stellung für die erste Schaltstufe bzw. in der Stellung für die zweite Schaltstufe zu halten. Bei einer fehlerhaften Ansteuerung des Steuerventils könnte hierbei ein unerwünschter Schaltvorgang des Schaltgetriebes ausgelöst werden. Sofern eine übergeordnete elektronische Steuerung, die das Freigabeventil ansteuert, mit einer entsprechenden Fehlererkennung ausgestattet ist, kann eine Fehlschaltung des Schaltgetriebes unterdrückt werden, indem das Freigabeventil die Steuerdruckversorgungsleitung der Steuerventile absperrt.

Gemäß einer vorteilhaften Weiterbildung der Erfindung ist zur Erfassung der Schaltstellungen des Schaltaktuators eine Schaltstellungserfassungsvorrichtung vorgesehen, die zwei Sensoren aufweist, die mit mehreren Schaltrampen zusammenwirken, wobei in der Neutralstellung des Schaltgetriebes beide Sensoren betätigt sind und bei einer Hubbewegung des Schaltkolbens jeweils nur einer der beiden Sensoren seinen Schaltzustand ändert. Eine derartige Schaltstellungserfassungsvorrichtung, die eine Wegerfassung des Schaltaktuators bildet und bei der bei einem bestimmten Hub des Schaltkolbens jeweils nur ein Sensor seinen Schaltzustand ändert, ermöglicht es, den Schaltzustand und die Schaltstellungen des Schaltaktuators eindeutig zu überwachen sowie die Stellungen des Schaltaktuators eindeutig zu erkennen.

Gemäß einer vorteilhaften Ausführungsform der Erfindung weist die Schaltstellungserfassungsvorrichtung eine erste Schaltrampe und eine zweite Schaltrampe auf, die in axialer Richtung voneinander beabstandet sind, wobei zwischen der ersten Schaltrampe und der zweiten Schaltrampe eine dritte Schaltrampe angeordnet ist, die sowohl von der ersten Schaltrampe als auch von der zweiten Schaltrampe in axialer Richtung beabstandet ist, wobei die beiden Sensoren in axialer Richtung voneinander beabstandet angeordnet sind. Mit einer aus zwei Sensoren, die mit drei Schaltrampen zusammenwirken, gebildeten Schaltstellungserfassungsvorrichtung kann eine eindeutige Überwachung des Schaltzustandes und somit der Schaltstellung des Schaltaktuators bei einfachem und kostengünstigen Aufbau der Schaltstellungserfassungsvorrichtung erzielt werden.

Der erste Sensor wirkt gemäß einer Ausführungsform der Erfindung über den Hubbereich des Schaltkolbens mit der ersten Schaltrampe und der dritten Schaltrampe zusammen und der zweite Sensor wirkt über den Hubbereich des Schaltkolbens mit der zweiten Schaltrampe und der dritten Schaltrampe zusammen.

Die Sensoren sind bevorzugt an der entsprechenden Schaltrampe betätigt und in den Bereichen zwischen und außerhalb der Schaltrampen unbetätigt. Bei den Sensoren kann es sich um analog oder digital arbeitende Sensoren handeln.

Sofern in der Schaltstellung für die Neutralstellung der erste Sensor von der ersten Schaltrampe und der zweite Sensor von der zweiten Schaltrampe betätigt ist, kann auf einfache Weise erzielt werden, dass in der Neutralstellung beide Sensoren betätigt sind.

Besondere Vorteile ergeben sich, wenn gemäß einer Ausführungsform der Erfindung, bei einer Betätigung des Schaltaktuators ausgehend von der Schaltstellung für die Neutralstellung in die Schaltstellung für die erste Schaltstufe in einem ersten, an die Neutralstellung angrenzenden Hubbereich des Schaltkolbens lediglich der erste Sensor den Schaltzustand ändert und von der ersten Schaltrampe nicht mehr betätigt ist, in einem zweiten Hubbereich des Schaltkolbens, der sich an den ersten Hubbereich anschließt, lediglich der zweite Sensor den Schaltzustand ändert und von der zweiten Schaltrampe nicht mehr betätigt ist, in einem dritten Hubbereich bei Erreichen der Schaltstellung für die erste Schaltstufe, der sich an den zweiten Hubbereich anschließt, lediglich der erste Sensor seinen Schaltzustand ändert und von der dritten Schaltrampe betätigt ist.

Entsprechende Vorteile sind erzielbar, wenn bei einer Betätigung des Schaltaktuators ausgehend von der Schaltstellung für die Neutralstellung in die Schaltstellung für die zweite Schaltstufe in einem ersten, an die Neutralstellung angrenzenden Hubbereich des Schaltkolbens lediglich der zweite Sensor den Schaltzustand ändert und von der zweiten Schaltrampe nicht mehr betätigt ist, in einem zweiten Hubbereich des Schaltkolbens, der sich an den ersten Hubbereich anschließt, lediglich der erste Sensor den Schaltzustand ändert und von der ersten Schaltrampe nicht mehr betätigt ist, in einem dritten Hubbereich bei Erreichen der Schaltstellung für die zweite Schaltstufe, der sich an den zweiten Hubbereich anschließt, lediglich der zweite Sensor seinen Schaltzustand ändert und von der dritten Schaltrampe betätigt ist.

Durch entsprechende axiale Beabstandung der drei Schaltrampen und axiale Beabstandung der beiden Sensoren wird somit erzielt, dass bei einer bestimmten Bewegung des Schaltkolbens jeweils immer nur ein Sensor seinen Schaltzustand verändert. Im Normalbetrieb können somit niemals die beiden Sensoren gleichzeitig ihren Schaltzustand ändern. Hierdurch wird eine eindeutige Zuordnung der Stellung des Schaltkolbens zu den Sensorsignalen der beiden Sensoren möglich.

Eine eindeutige Zuordnung der Stellung des Schaltkolbens durch die Sensorsignale der beiden Sensoren wird hierbei auf besonders einfache Weise möglich, wenn die Sensoren mit einer elektronischen Steuereinrichtung in Wirkverbindung stehen, die aus den Schaltzuständen der Sensoren die Funktion des Schaltaktuators überwacht, wobei bei einem sich verändernden Schaltzustand eines Sensors die elektronische Steuereinrichtung den unmittelbar zeitlich vorausgegangenen Vorzustand der Sensoren bei der Ermittlung der Stellung des Schaltkolbens berücksichtigt. Aus der Schaltfolge der beiden Sensoren und somit den sich ändernden Schaltzuständen der beiden Sensoren kann auf einfache Weise in eindeutiger Weise die Stellung des Schaltkolbens erfasst und bei einem Schaltvorgang des Schaltgetriebes die Schaltstellung überwacht werden.

Besondere Vorteile ergeben sich, wenn die elektronische Steuereinrichtung bei einem Schaltvorgang des Schaltgetriebes die Schaltfolge der Schaltzustände der Sensoren ermittelt und überwacht.

Gemäß einer vorteilhaften Weiterbildung der Erfindung ermittelt die elektronische Steuereinrichtung eine unrichtige Schaltfolge der Schaltzustände der Sensoren und erkennt eine unrichtige Schaltfolge als Fehler, insbesondere eine Schaltfolge, bei der sich die Schaltzustände der beiden Sensoren gleichzeitig ändern. Mit der elektronischen Steuereinrichtung können unzulässige Schaltfolgen der beiden Sensoren sicher ermittelt und beispielsweise für Diagnosezwecke genutzt werden.

Die Sensoren können als einfach ausgebaute und mit hoher Betriebssicherheit arbeitende Näherungssensoren oder Stößelschalter ausgebildet sein.

Die Schaltrampen können gemäß einer vorteilhaften Ausführungsform der Erfindung von nockenförmigen Erhebungen oder gemäß einer alternativen Ausführungsform der Erfindung von nutförmigen Vertiefungen gebildet sein.

Die Schaltstellungserfassungsvorrichtung kann gemäß einer vorteilhaften Ausgestaltungsform der Erfindung an dem Schaltkolben oder gemäß einer alternativen Ausgestaltungsform der Erfindung an einem ein mit dem Schaltkolben in mechanischer Wirkverbindung stehenden und von dem Schaltkolben betätigten Schaltelement des Getriebes angeordnet sein.

Die Erfindung betrifft weiterhin ein hydromechanisches Getriebe mit einem durch eine Hydropumpe antreibbaren Hydromotor eines hydrostatischen Stufenlosgetriebes, wobei der Hydromotor ein mechanisches Zwei-Gang-Schaltgetriebe antreibt, insbesondere ein Stillstandsschaltgetriebe, das mit einem erfindungsgemäßen hydraulischen Schaltaktuator zwischen einer ersten Schaltstufe, einer zweiten Schaltstufe und einer eine Leerlaufstellung bildenden Neutralstellung schaltbar ist, wobei der Schaltaktuator Bestandteil des Schaltgetriebes ist, wobei der Schaltaktuator an ein Getriebegehäuse des Schaltgetriebes angebaut ist und mit einer Befestigungsschnittstelle zur Verbindung mit einem aus dem Getriebegehäuse herausragenden Schaltelement des Getriebes versehen ist. Der erfindungsgemäße Schaltaktuator ermöglicht es auf einfache Weise, ein als Stillstandschaltgetriebe ausgebildetes Zwei-Gang-Schaltgetriebe in die erste Schaltstufe für einen ersten Gang und die zweite Schaltstufe für den zweiten Gang sowie für die elektrohydraulische Synchronisation durch den Hydromotor bei einem Gangwechsel während der Fahrt aktiv in die Neutralstellung zu betätigen, um mit einem Stillstandschaltgetriebe einen Gangwechsel und eine Wechsel der Schaltstufen unter Fahrt zu ermöglichen.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform des erfindungsgemäßen Schaltaktuators,
- Figur 2: eine zweite Ausführungsform des Schaltaktuators,
- Figur 3: einen erfindungsgemäßen Schaltaktuator angebaut an ein Schaltgetriebe,
- Figur 4: die Schaltstellungserfassungsvorrichtung der Figur 2 in einer vergrößerten Darstellung und
- Figur 5: eine Wertetabelle von Sensorsignalen der Schaltstellungserfassungsvorrichtung mit den zugeordneten Schaltzuständen des Schaltaktuators.

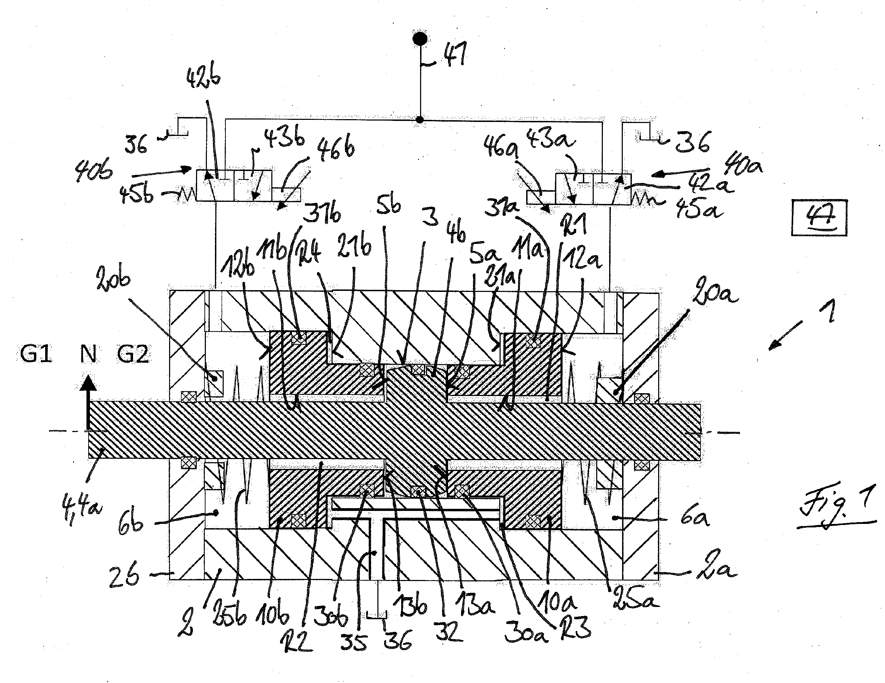

In der Figur 1 ist ein erfindungsgemäßer hydraulischer Schaltaktuator 1, mit dem ein nicht näher dargestelltes mechanischen Zwei-Gang-Schaltgetriebe, insbesondere ein Stillstandsschaltgetriebe, in Schaltstellungen für eine erste Schaltstufe G1, für eine zweite Schaltstufe G2 und für eine Leerlaufstellung bildende Neutralstellung N geschaltet werden kann, dargestellt.

Der Schaltaktuator 1 umfasst ein Gehäuse 2, das mit einer als Längsbohrung ausgebildeten Gehäusebohrung 3 versehen ist. In der Gehäusebohrung 3 ist ein Schaltkolben 4 des Schaltaktuators 1 längsverschiebbar angeordnet, dessen Axialpositionen und somit Schaltstellungen die Schaltstufen G1, G2 und die Neutralstellung N definieren. Die Neutralstellung N ist als Mittelstellung zwischen den beiden Schaltstufen G1, G2 ausgebildet. In der Figur 1 befindet sich der Schaltaktuator in der Schaltstellung für die Neutralstellung N. Der Schaltkolben 4 steht auf nicht mehr dargestellte Weise mit einem Schaltelement des Schaltgetriebes in Wirkverbindung, mit dem Schaltverzahnungen des Schaltgetriebes für die beiden Schaltstufen G1, G2 geöffnet und geschlossen werden können.

Der Schaltkolben 4 weist eine Kolbenstange 4a und einem an der Kolbenstange 4a angeordneten Kolbenabschnitt 4b auf. An einer ersten Stirnseite des Kolbenabschnitts 4b ist eine erste Steuerdruckfläche 5a ausgebildet ist, die mit einem ersten Steuerdruckraum 6a in Verbindung steht, der innerhalb des Gehäuses 2 ausgebildet ist. Bei einem im ersten Steuerdruckraum 6a anstehenden Steuerdruck wird der Schaltkolben 4 in die Schaltstellung für die erste Schaltstufe G1 betätigt.

An einer zweiten Stirnseite des Kolbenabschnitts 4b, die der ersten Stirnseite 5a gegenüberliegt, ist eine zweite Steuerdruckfläche 5b ausgebildet ist, die mit einem zweiten Steuerdruckraum 6b in Verbindung steht. Der zweite Steuerdruckraum 6b ist ebenfalls in dem Gehäuse 2 ausgebildet. Bei einem im zweiten Steuerdruckraum 6b anstehenden Steuerdruck ist der Schaltkolben 4 in die Schaltstellung für die zweite Schaltstufe G2 betätigbar.

Der erfindungsgemäße Schaltaktuator 1 weist zwei Stufenkolben 10a, 10b auf, die jeweils koaxial zu der Kolbenstange 4a des Schaltkolbens 4 längsverschiebbar in der Gehäusebohrung 3 angeordnet sind. Die Stufenkolben 10a, 10b sind jeweils mit einer Längsbohrung 11a, 11b versehen, durch die die Kolbenstange 4a des Schaltkolbens 4 hindurchgeführt ist.

Der erste Stufenkolben 10a ist in dem ersten Steuerdruckraum 6a längsverschiebbar angeordnet und weist eine von dem im ersten Steuerdruckraum 6a anstehenden Steuerdruck beaufschlagte Steuerfläche 12a auf, die an einer äußeren Stirnseite des Stufenkolbens 10a ausgebildet ist. Der erste Stufenkolben 10a ist mit einer inneren Stirnseite 13a mit der ersten Stirnseite 5a des Kolbenabschnitts 4b des Schaltkolbens 4 in Wirkverbindung bringbar. Der zweite Stufenkolben 10b ist entsprechend in dem zweiten Steuerdruckraum 6b längsverschiebbar angeordnet und weist eine von dem im zweiten Steuerdruckraum 6b anstehenden Steuerdruck beaufschlagte Steuerfläche 12b auf, die an einer äußeren Stirnseite des Stufenkolbens 10b ausgebildet ist. Der zweite Stufenkolben 10b ist mit einer inneren Stirnseite 13b mit der zweiten Stirnseite 5b des Kolbenabschnitts 4b des Schaltkolbens 4 in Wirkverbindung bringbar.

Um die an der ersten Stirnseite des Kolbenabschnitts 4b ausgebildete Steuerdruckfläche 5a des Schaltkolbens 4 mit dem im ersten Steuerdruckraum 6a anstehenden Steuerdruck beaufschlagen zu können, ist zwischen dem Innendurchmesser des ersten Stufenkolbens 10a an der Längsbohrung 11a und dem Außendurchmesser der Kolbenstange ein Ringspalt R1 ausgebildet, über den die erste Stirnseite des Kolbenabschnitts 4b des Schaltkolbens 4 und somit die erste Steuerdruckfläche 5a mit dem ersten Steuerdruckraum 6a in Verbindung steht. Um die an der zweiten Stirnseite des Kolbenabschnitts 4b ausgebildete Steuerdruckfläche 5b des Schaltkolbens 4 mit dem im zweiten Steuerdruckraum 6b anstehenden Steuerdruck beaufschlagen zu können, ist entsprechend zwischen einem Innendurchmesser des zweiten Stufenkolbens 10b an der Längsbohrung 11b und dem Außendurchmesser der Kolbenstange 5a ein Ringspalt R2 ausgebildet, über den die zweite Stirnseite des Kolbenabschnitts 4b des Schaltkolbens 4 und somit die zweite Steuerdruckfläche 5b mit dem zweiten Steuerdruckraum 6b in Verbindung steht.

Der erfindungsgemäße Schaltaktuator 1 ist mit gehäuseseitigen Anschlägen versehen, die die Position des Schaltkolbens 4 und somit die Schaltstellungen für die erste Schaltstufe G1, die zweite Schaltstufe G2 und die Neutralstellung N festlegen.

An dem Gehäuse 1 ist hierzu ein erster Anschlag 20a ausgebildet, der mit dem ersten Stufenkolben 10a zusammenwirkt und den maximalen Hub des Schaltkolbens 4 in der Schaltstellung für die zweite Schaltstufe G2 begrenzt. An dem Gehäuse 1 ist entsprechend ein zweiter Anschlag 20b ausgebildet, der mit dem zweiten Stufenkolben 10b zusammenwirkt und den maximalen Hub des Schaltkolbens 4 in der Schaltstellung für die erste Schaltstufe G1 begrenzt. Die Anschläge 20a, 20b sind im dargestellten Ausführungsbeispiel an Gehäusedeckeln 2a, 2b des Gehäuses 2 angeordnet bzw. ausgebildet, die den entsprechenden Steuerdruckraum 6a, 6b begrenzen. Die Kolbenstange 4a des Schaltkolbens 4 erstreckt sich durch die beiden Gehäusedeckel 2a, 2b und ist mittels Dichtungseinrichtungen gegenüber dem jeweiligen Gehäusedeckel 2a, 2b abgedichtet.

An dem Gehäuse 2 ist für jeden Stufenkolben 10a, 10b ein Anschlag 21a, 21b für die Neutralstellung N ausgebildet. Bei einer Druckbeaufschlagung des ersten Steuerdruckraums 6a mit einem Steuerdruck wird der erste Stufenkolben 10a an den dem ersten Stufenkolben 10a zugeordneten Anschlag 21a für die Neutralstellung N betätigt. Entsprechend wird bei einer Druckbeaufschlagung des zweiten Steuerdruckraums 6b mit einem Steuerdruck der zweite Stufenkolben 10b an den dem zweiten Stufenkolben 10b zugeordneten Anschlag 21b für die Neutralstellung N betätigt.

Zur Aufnahme der Stufenkolben 10a, 10b ist die Gehäusebohrung 3 beiderseits des Kolbenabschnitts 4b als Stufenbohrung ausgebildet, in der jeweils ein Stufenkolben 10a bzw. 10b längsverschiebbar angeordnet ist. Der Kolbenabschnitt 4b des Schaltkolbens 4 ist in einem im Durchmesser verringerten mittleren Abschnitt der Stufenbohrung angeordnet. Die im Durchmesser vergrößerten Abschnitte der jeweiligen Stufenbohrung bilden die Steuerdruckräume 6a, 6b.

Jeder Stufenkolben 10a, 10b ist mit einem im Durchmesser verringerten inneren Abschnitt, an dem die innere Stirnseite 13a, 13b ausgebildet ist, in dem mittleren Abschnitt der Stufenbohrung angeordnet. Mit einem im Durchmesser vergrößerten äußeren Abschnitt ist der Stufenkolben 10a in dem im Durchmesser vergrößerten äußeren Abschnitt der Stufenbohrung angeordnet, der den ersten Steuerdruckraum 6a bildet. Der zweite Stufenkolben 10b ist mit einem im Durchmesser vergrößerten äußeren Abschnitt in dem im Durchmesser vergrößerten äußeren Abschnitt der Stufenbohrung angeordnet, der den zweiten Streuerdruckraum 6b bildet.

Der erste Anschlag 21a für die Neutralstellung N ist hierbei zwischen dem Durchmesserabsatz der den ersten Stufenkolben 10a aufnehmenden Stufenbohrung und dem Durchmesserabsatz des ersten Stufenkolbens 10a gebildet. Entsprechend ist der zweite Anschlag 21b für die Neutralstellung N zwischen dem Durchmesserabsatz der den zweiten Stufenkolben 10b aufnehmenden Stufenbohrung und dem Durchmesserabsatz des zweiten Stufenkolbens 10b gebildet.

Der erfindungsgemäße Schaltaktuator 1 weist eine erste Federeinrichtung 25a auf, die den ersten Stufenkolben 10a in Richtung der ersten Stirnseite 5a des Kolbenabschnitts 4b des Schaltkolbens 4 beaufschlagt, und eine zweite Federeinrichtung 25b auf, die den zweiten Stufenkolben 10b in Richtung der zweiten Stirnseite 5b des Kolbenabschnitts 4b des Schaltkolbens 4 beaufschlagt. Die Vorspannungen der Federeinrichtungen 25a, 25b sind derart bemessen, dass die Stufenkolben 10a, 10b in Anlage an dem Kolbenabschnitt 4b des Schaltkolbens 4 bzw. dem zugeordneten Anschlag 21a, 21b für die Neutralstellung N gehalten werden, die Federeinrichtungen 25a, 25b den Schaltkolben 4 jedoch nicht zentrieren und nicht in die Schaltstellung für die Neutralstellung N betätigen können.

In dem Ausführungsbespiel der Figur 1 ist jeder Stufenkolben 10a, 10b gegenüber dem mittleren Abschnitt der Stufenbohrung und gegenüber dem äußeren Abschnitt der Stufenbohrung abgedichtet. In der Figur 1 sind hierzu an dem inneren Abschnitt und dem äußeren Abschnitt des Stufenkolbens 10a entsprechende Dichtungseinrichtungen 30a, 31a angeordnet. Entsprechend sind an dem inneren Abschnitt und dem äußeren Abschnitt des Stufenkolbens 10b entsprechende Dichtungseinrichtungen 30b, 31b angeordnet.

Weiterhin ist der Kolbenabschnitt 4b des Schaltkolbens 4 gegenüber dem mittleren Abschnitt der Gehäusebohrung 3 abgedichtet. Hierzu ist an dem Kolbenabschnitt 4b eine Dichtungseinrichtung 32 angeordnet.

In dem Ausführungsbeispiel der Figur 1 ist der Schaltkolben 4 einteilig ausgeführt und hierzu der Kolbenabschnitt 4b einstückig an der Kolbenstange 4a ausgebildet.

An dem Stufenkolben 10a ist zwischen dem Durchmesserabsatz der Stufenbohrung und dem Durchmesserabsatz des ersten Stufenkolbens 10a ein erster Ringraum R3 gebildet, der über einen im Gehäuse 2 ausgebildeten Entlastunganal 35 zu einem Behälter 36 entlastet ist. Ein zweiter Ringraum R4, der zwischen dem Durchmesserabsatz der Stufenbohrung und dem Durchmesserabsatz des zweiten Stufenkolbens 10b gebildet ist, ist über den Entlastungskanal 35 ebenfalls zu dem Behälter 36 entlastet.

Der erste Steuerdruckraum 6a ist mittels eines ersten Steuerventils 40a mit einem Steuerdruck beaufschlagbar oder von dem Steuerdruck entlastbar. Entsprechend ist der zweite Steuerdruckraum 6b mittels eines zweiten Steuerventils 40b mit einem Steuerdruck beaufschlagbar oder von dem Steuerdruck entlastbar ist. Die Steuerventile 40a, 40b sind bevorzugt jeweils als elektrisch betätigtes Schaltventil oder als elektrisch betätigtes Proportionalventil oder als elektrisch betätigtes Druckregelventil ausgebildet.

Das Steuerventil 40a ist an eine Steuerdruckversorgungsleitung 41 angeschlossen, die mit einer Steuerdruckquelle in Verbindung steht. In einer ersten Steuerstellung 42a verbindet des Steuerventil 40a den Steuerdruckraum 6a zu dem Behälter 36. In einer zweiten Steuerstellung 43a verbindet das Steuerventil 40a zur Erzeugung eines in dem Steuerdruckraum 6a anstehenden Steuerdrucks den Steuerdruckraum 6a mit der Steuerdruckversorgungsleitung 41. Das Steuerventil 40b verbindet in einer ersten Steuerstellung 42b den Steuerdruckraum 6b zu dem Behälter 36. In einer zweiten Steuerstellung 43b verbindet das Steuerventil 40b zur Erzeugung eines in dem Steuerdruckraum 6b anstehenden Steuerdrucks den Steuerdruckraum 6b mit der Steuerdruckversorgungsleitung 41.

Im dargestellten Ausführungsbeispiel sind die Steuerventile 40a, 40b derart ausgeführt, dass im nicht angesteuerten Zustand der von dem entsprechenden Steuerventil 40a, 40b angesteuerte Steuerdruckraum 6a, 6b zu dem Behälter 36 entlastet ist und bei einer elektrischen Ansteuerung des jeweiligen Steuerventils 40a, 40b ein in dem zugeordneten Steuerdruckraum 6a, 6b anstehender Steuerdruck erzeugbar ist.

Die Steuerventile 40a, 40b sind hierzu mittels einer Federeinrichtung 45a, 45b in die erste Steuerstellung 42a, 42b betätigt und mittels einer elektrischen Betätigungseinrichtung 46a, 46b, beispielsweise eines Schaltmagneten oder Proportionalmagneten, in Richtung der zweiten Steuerstellung 42a, 42b betätigbar. Die elektrischen Betätigungseinrichtung 46a, 46b stehen zur Ansteuerung mit einer elektronischen Steuereinrichtung 47 in Wirkverbindung.

Sofern von der Steuereinrichtung 47 beide Steuerventile 40a, 40b in die Steuerstellungen 43a, 43b angesteuert sind und in beiden Steuerdruckräumen 6a, 6b ein Steuerdruck ansteht, befindet sich der Schaltaktuator 1 in der dargestellten Schaltstellung für die Neutralstellung N. Der erste Stufenkolben 10a ist von dem im Steuerdruckraum 6a anstehenden Steuerdruck an der Steuerfläche 12a beaufschlagt und verfährt an den Anschlag 21a für die Neutralstellung N. Entsprechend ist der zweite Stufenkolben 10b von dem im Steuerdruckraum 6b anstehenden Steuerdruck an der Steuerfläche 12b beaufschlagt und verfährt an den Anschlag 21b für die Neutralstellung N. Über die inneren Stirnseite 13a, 13b der Stufenkolben 10a, 10b, die mit den gegenüberliegenden Stirnseite 5a, 5b des Kolbenabschnitts 4b des Schaltkolbens 4 in Kontakt stehen, wird der Schaltkolben 4 in die Schaltstellung für die Neutralstellung N betätigt. Sofern lediglich das Steuerventil 40a in die Steuerstellung 43a angesteuert wird und das Steuerventil 40b von der Steuereinrichtung 47 nicht angesteuert ist, steht lediglich im Steuerdruckraum 6a ein Steuerdruck an. Der Steuerdruckraum 6b ist über das in der Steuerstellung 42b befindliche Steuerventil 40b zum Behälter 36 entlastet. Über den Ringspalt R1 steht der im Steuerdruckraum 6a anstehende Steuerdruck an der Steuerfläche 5a des Kolbenabschnitts 4b an, so dass der Schaltkolben 4 nach in der Figur 1 links betätigt wird. Hierbei gelangt der von dem Kolbenabschnitt 4b mitgenommene zweite Stufenkolben 10b in Anlage an den Anschlag 20b und begrenzt den Kolbenhub des Schaltkolbens 4 und somit die Schaltstellung für die erste Schaltstufe G1. Sofern lediglich das Steuerventil 40b in die Steuerstellung 43b angesteuert wird und das Steuerventil 40a von der Steuereinrichtung 47 nicht angesteuert ist, steht lediglich im Steuerdruckraum 6b ein Steuerdruck an. Der Steuerdruckraum 6a ist über das in der Steuerstellung 42a befindliche Steuerventil 40a zum Behälter 36 entlastet. Über den Ringspalt R2 steht der im Steuerdruckraum 6b anstehende Steuerdruck an der Steuerfläche 5b des Kolbenabschnitts 4b an, so dass der Schaltkolben 4 nach in der Figur 1 rechts betätigt wird. Hierbei gelangt der von dem Kolbenabschnitt 4b mitgenommene erste Stufenkolben 10a in Anlage an den Anschlag 20a und begrenzt den Kolbenhub des Schaltkolbens 4 und somit die Schaltstellung für die zweite Schaltstufe G2. Sofern von der Steuereinrichtung 47 beide Steuerventile 40a, 40b nicht betätigt sind und somit beide Steuerdruckräume 6a, 6b zum Behälter 36 entlastet sind, bleibt an dem Schaltaktuator 1 der Vorzustand und somit die zuvor betätigte Steuerstellung N, G1 bzw. G2 erhalten.

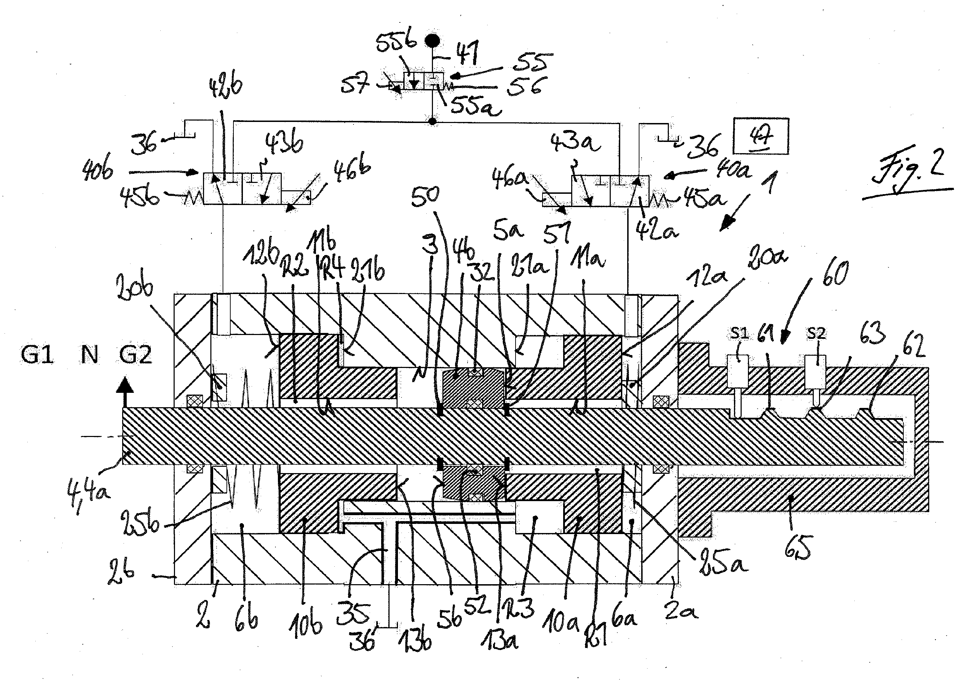

In der Figur 2 ist eine zweite Ausführungsform des erfindungsgemäßen Schaltaktuators 1 dargestellt. Gleiche Bauteile sind hierbei mit gleichen Bezugsziffern versehen.

Bei dem Ausführungsbeispiel der Figur 2 erfolgt die Abdichtung der beiden Stufenkolben 10a, 10b in den Stufenbohrungen durch entsprechende Passungen zwischen dem Innendurchmesser der Stufenbohrung und dem Außendurchmesser des Stufenkolbens 10a, 10b. Die Durchmesser der inneren Abschnitte der Stufenkolben 10a, 10b sind hierbei derart an den Durchmesser des mittleren Abschnitts der Gehäusebohrung 3 und die äußeren Abschnitte der Stufenkolben 10a, 10b derart an den Durchmesser der äußeren Abschnitte der Gehäusebohrung 3 angepasst, dass eine Abdichtung der Steuerdruckräume 6a, 6b erzielbar ist.

Bei dem Ausführungsbeispiel der Figur 2 ist der Schaltkolben 4 mehrteilig ausgeführt und hierzu der Kolbenabschnitt 4b von einem separaten Bauteil gebildet, das an der Kolbenstange 4a befestigt und gegenüber der Kolbenstange 4a abgedichtet ist. Zur Befestigung des Kolbenabschnitts 4b an der Kolbenstange 4a ist eine Befestigungseinrichtung vorgesehen, die im dargestellten Ausführungsbeispiel von zwei Sicherungsscheiben 50, 51 gebildet ist. Die Abdichtung des Kolbenabschnitts 4b gegenüber der Kolbenstange 4a erfolgt in dem dargestellten Ausführungsbeispiel mittels einer Dichtungseinrichtung 52.

In der Figur 2 ist weiterhin in der Steuerdruckversorgungsleitung 41 der beiden Steuerventile 40a, 40b ein elektrisch ansteuerbares Freigabeventil 55 angeordnet, das von der elektronischen Steuereinrichtung 47 ansteuerbar ist. Das Freigabeventil 55 weist eine Sperrstellung 55a und eine Durchflussstellung 55b auf. Im dargestellten Ausführungsbeispiel ist das Freigabeventil 55 von einer Federeinrichtung 56 in die Sperrstellung 55a betätigt und mittels einer elektrischen Betätigungseinrichtung 57, beispielsweise einem Schaltmagnet, in die Durchflussstellung 55b betätigbar. Die Betätigungseinrichtung 57 steht zur Ansteuerung mit der elektronischen Steuereinrichtung 47 in Verbindung.

In der Figur 2 ist der Schaltaktuator 1 in der Schaltstellung für die zweite Schaltstufe G2 dargestellt.

In der Figur 2 ist weiterhin der erfindungsgemäße Schaltaktuator 1 mit einer Schaltstellungserfassungsvorrichtung 60 versehen, mit der die Schaltstellungen N, G1, G2 des Schaltaktuators 1 erfasst und überwacht werden können.

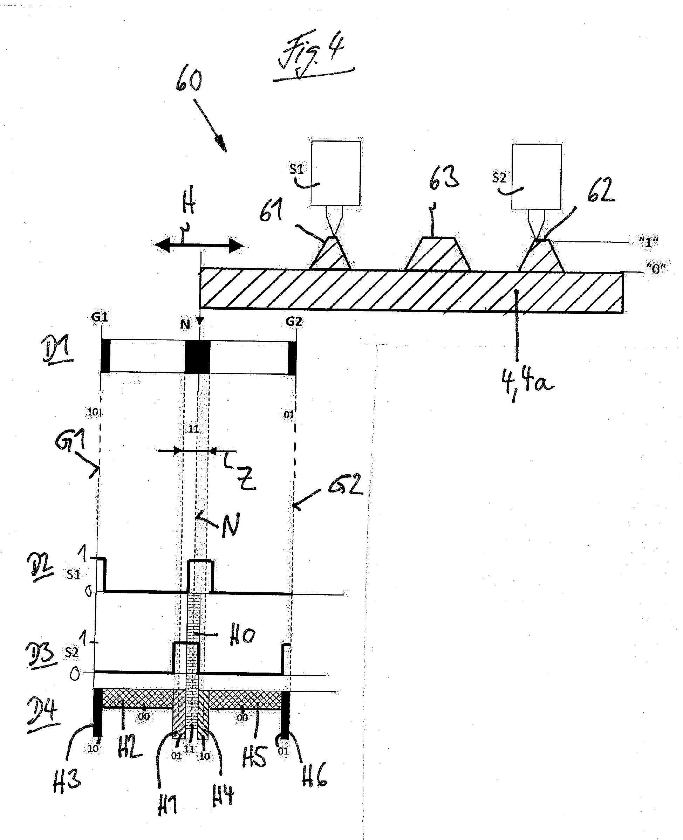

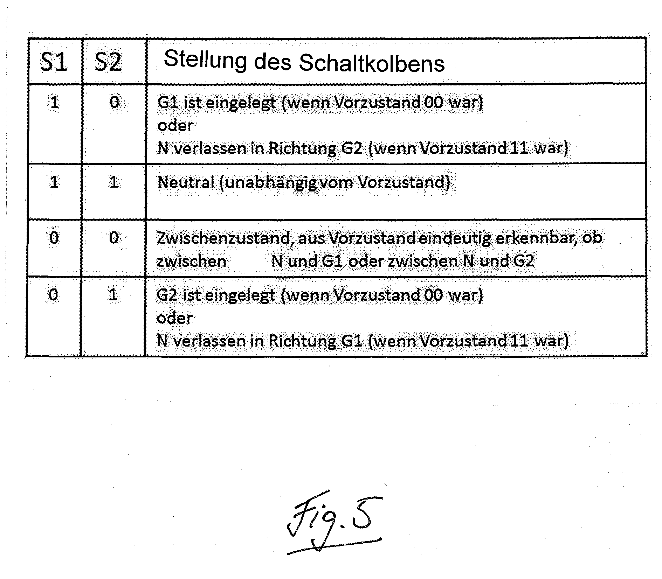

Der Aufbau der Schaltstellungserfassungsvorrichtung 60 und deren Funktion wird anhand der Figuren 4 und 5 näher beschrieben.

In der Figur 4 ist die Schaltstellungserfassungsvorrichtung 60 der Figur 2 in einer vergrößerten Darstellung dargestellt. Die Figur 4 zeigt die Schaltstellungserfassungsvorrichtung 60 in der Schaltstellung für die Neutralstellung N.

In der Figur 2 ist die Schaltstellungserfassungsvorrichtung 60 in der Schaltstellung für die zweite Schaltstufe G2 dargestellt.

Die Schaltstellungserfassungsvorrichtung 60 weist zwei Sensoren S1, S2 auf, die mit mehreren Schaltrampen 61, 62, 63 zusammenwirken. Die Sensoren S1, S2 sind an dem Gehäuse 2 bzw. einem separaten Gehäuse 65 der Schalterfassungsvorrichtung 60, das an das Gehäuse 2 angebaut ist, angeordnet und die Schaltrampen 61, 62, 63 an dem längsverschiebbaren Schaltkolben 4. Die Sensoren S1, S2 sind mittels der Schaltrampen 61, 62, 63 in einen Zustand "1" betätigbar, der einem betätigten Zustand der Sensoren S1, S2 entspricht. Zwischen und außerhalb der Schaltrampen 61, 62, 63 befinden sich die Sensoren S1, S2 in einem Zustand "0", der einem unbetätigten Zustand der Sensoren S1, S2 entspricht. Die Sensoren S1, S2 stehen mit der elektronischen Steuereinrichtung 47 in Verbindung.

Die Schaltstellungserfassungsvorrichtung 60 weist eine erste Schaltrampe 61 und eine zweite Schaltrampe 62 auf, die in axialer Richtung voneinander beabstandet sind. Zwischen diesen beiden Schaltrampen 61, 62 ist eine dritte Schaltrampe 63 angeordnet ist, die sowohl von der ersten Schaltrampe 61 als auch von der zweiten Schaltrampe 62 in axialer Richtung beabstandet ist. Die beiden Sensoren S1, S2 sind ebenfalls in axialer Richtung voneinander beabstandet angeordnet.

Der axiale Abstand der Schaltrampen, 61, 62, 63, die Form der Schaltrampen 61, 62, 63 und der axiale Abstand der beiden Sensoren S1, S2 ist derart gewählt, dass in der Neutralstellung N des Schaltgetriebes beide Sensoren S1, S2 betätigt sind (Zustand "1" an beiden Sensoren S1, S2) und bei einer Hubbewegung H des Schaltkolbens 4 jeweils nur einer der beiden Sensoren S1, S2 seinen Schaltzustand ändert.

Der erste Sensor S1 wirkt über den Hubbereich H des Schaltkolbens 4 mit der ersten Schaltrampe 61 und der dritten Schaltrampe 63 zusammen. Der zweite Sensor S2 wirkt über den Hubbereich H des Schaltkolbens 4 mit der zweiten Schaltrampe 62 und der dritten Schaltrampe 63 zusammen.

In der Figur 4 ist die Neutralstellung N dargestellt. Bei einer Hubbewegung H des Schaltkolbens 4 nach in der Figur 4 links wird der Schaltkolben 4 in die Schaltstellung für die erste Schaltstufe G1 betätigt. Entsprechend wird bei einer Hubbewegung H des Schaltkolbens 4 nach in der Figur 4 rechts der Schaltkolben 4 in die Schaltstellung für die zweite Schaltstufe G2 betätigt.

In der Figur 4 sind hierbei in dem Diagramm D1 über den Hubbereich H die Schaltstellungen G1, N und G2 des Schaltgetriebes dargestellt. Das Diagramm D2 zeigt die Schaltzustände "0" und "1" des ersten Sensors S1 über den Hubbereich H. Das Diagramm D3 zeigt die Schaltzustände "0" und "1" des zweiten Sensors S2 über den Hubbereich H. In dem Diagramm D4 sind die sich ergebenden Sensorzustände der beiden Sensoren S1 und S2 über den Hubbereich H dargestellt. Die Sensorzustände in dem Diagramm D4 sind als Zahlenfolge mit zwei Ziffern dargestellt, wobei die erste Ziffer den Zustand "0" bzw. "1" des ersten Sensors S1 und die zweite Ziffer den Zustand "0" bzw. "1" des zweiten Sensors S2 bildet.

In der Figur 5 ist eine Wertetabelle der Sensorzustände der beiden Sensoren S1, S2 dargestellt und sind die von der elektronischen Steuereinrichtung 47 aus den Sensorzuständen der beiden Sensoren S1, S2 ermittelten Zustände und Stellungen des Schaltkolbens 4 dargestellt.

Wie in der Figur 4 verdeutlicht ist, ist in der Neutralstellung N des Schaltkolbens 4 der erste Sensor S1 von der ersten Schaltrampe 61 und der der zweite Sensor S2 von der zweiten Schaltrampe 63 betätigt ist. Als Sensorzustand der beiden Sensoren S1, S2 ergibt sich somit in der Neutralstellung N über einen mittigen Hubbereich H0 des Schaltkolbens 4 der Zustand "11".

Bei einer Betätigung des Schaltaktuators 1 ausgehend von der Schaltstellung für die Neutralstellung N in die Schaltstellung für die erste Schaltstufe G1 ändert sich in einem ersten Hubbereich H1 des Schaltkolbens 4, der an die Neutralstellung N angrenzt, lediglich der Zustand des ersten Sensor S1. Im ersten Hubbereichs H1 ist der erste Sensor S1 von der ersten Schaltrampe S1 nicht mehr betätigt und ändert seinen Schaltzustand von dem Zustand "1" in den Zustand "0". Der zweite Sensor S2 ist in dem Hubbereich H1 noch von der zweiten Schaltrampe 62 betätigt und weist unverändert den Schaltzustand "1" auf. Im ersten Hubbereichs H1 ändert sich somit der Schaltzustand der beiden Sensoren von "11" für die Neutralstellung N in "01". Bei einer weiteren Bewegung des Schaltkolbens 4 in Richtung der Schaltstellung G1 ändert in einem zweiten Hubbereich H2 des Schaltkolbens 4, der sich an den ersten Hubbereich H1 anschließt, lediglich der zweite Sensor S2 seinen Schaltzustand. Der zweite Sensor S2 ist in dem Hubbereich H2 nicht mehr von der zweiten Schaltrampe 62 betätigt und ändert seinen Schaltzustand von dem Zustand "1" in den Zustand "0". In dem Hubbereich H2 ist der erste Sensor S1 unverändert unbetätigt und weist den Schaltzustand "0" auf. In dem Hubbereich H2 ändert sich somit der Schaltzustand der beiden Sensoren S1, S2 von "01" für den ersten Hubbereich H1 in "00". Bei einer weiteren Bewegung des Schaltkolbens 4 in Richtung der Schaltstellung G1 ändert in einem dritten Hubbereich H3 bei Erreichen der Schaltstellung für die erste Schaltstufe G1, der sich an den zweiten Hubbereich H2 anschließt, lediglich der erste Sensor S1 seinen Schaltzustand. In dem Hubbereich H3 wird der erste Sensor S1 von der dritten Schaltrampe 63 betätigt, so dass der erste Sensor S1 seinen Schaltzustand von "0" in "1" ändert. Der zweite Sensor S2 ist im dritten Hubbereich H3 unverändert unbetätigt und weist den Schaltzustand "0" auf. In dem dritten Hubbereich H3 ändert sich somit der Schaltzustand der beiden Sensoren S1, S2 von dem Zustand "00" für den zweiten Hubbereich H2 in den Zustand "10".

Bei einer Betätigung des Schaltaktuators 1 ausgehend von der Schaltstellung für Neutralstellung N in die Schaltstellung für die erste Schaltstufe G1 ergibt sich somit eine Schaltfolge der Schaltzustände der beiden Sensoren S1, S2 von "11" - "01" - "00" - "10", die nacheinander durchlaufen wird. Die elektronische Steuereinrichtung 47 überwacht diese Schaltfolge auf Richtigkeit. Weichen bei einer Betätigung des Schaltaktuators 1 ausgehend von der Schaltstellung für Neutralstellung N in die Schaltstellung für die erste Schaltstufe G1 die von den Sensoren S1, S2 gelieferten Schaltzustände von dieser Schaltfolge ab, wird dies von der elektronischen Steuereinrichtung 47 als Fehler erkannt.

Bei einer Betätigung des Schaltaktuators 1 ausgehend von der Schaltstellung für die Neutralstellung N in die Schaltstellung für die zweite Schaltstufe G2 ändert sich in einem ersten Hubbereich H4 des Schaltkolbens 4, der an die Neutralstellung N angrenzt, lediglich der Zustand des zweiten Sensors S2. Im ersten Hubbereich H4 ist der zweite Sensor S2 von der zweiten Schaltrampe 62 nicht mehr betätigt und ändert seinen Schaltzustand von dem Zustand "1" in den Zustand "0". Der erste Sensor S1 ist in dem ersten Hubbereich H4 noch weiterhin von der ersten Schaltrampe 61 betätigt und weist unverändert den Schaltzustand "1" auf. Im ersten Hubbereich H4 ändert sich somit der Schaltzustand der beiden Sensoren von "11" für die Neutralstellung N in "10". Bei einer weiteren Bewegung des Schaltkolbens 4 in Richtung der Schaltstellung G2 ändert in einem zweiten Hubbereich H5 des Schaltkolbens 4, der sich an den ersten Hubbereich H4 anschließt, lediglich der erste Sensor S1 den Schaltzustand. Der erste Sensor S1 ist in dem Hubbereich H5 nicht mehr von der ersten Schaltrampe 61 betätigt, so dass sich Zustand des ersten Sensors S1 von "1" in "0" ändert. In dem Hubbereich H5 ist der zweite Sensor S2 unverändert unbetätigt mit dem Zustand "0". In dem Hubbereich H5 ändert sich somit der Schaltzustand der beiden Sensoren von dem Zustand "10" für den Hubbereich H4 in den Zustand "00". Bei einer weiteren Betätigung des Schaltkolbens 4 in Richtung der Schaltstellung G2 ändert in einem dritten Hubbereich H6 bei Erreichen der Schaltstellung für die zweite Schaltstufe G2, der sich an den zweiten Hubbereich H5 anschließt, lediglich der zweite Sensor S2 seinen Schaltzustand. In dem dritten Hubbereich H6 wird der zweite Sensor S2 von der dritten Schaltrampe 63 betätigt, so dass der zweite Sensor S2 seinen Zustand von "0" in "1" ändert. Der erste Sensor S1 ist in dem Hubbereich H6 weiterhin unbetätigt mit dem Zustand "0". In dem dritten Hubbereich H6 ändert sich somit der Schaltzustand der beiden Sensoren von "00" für den zweiten Hubbereich H5 in den Zustand "01". In der Figur 2 ist der Schaltkolben 4 in dem dritten Hubbereich H6 und der Schaltstellung für die zweite Schaltstufe G2 dargestellt.

Bei einer Betätigung des Schaltaktuators 1 ausgehend von der Schaltstellung für Neutralstellung N in die Schaltstellung für die zweite Schaltstufe G2 ergibt sich somit eine Schaltfolge der Schaltzustände der beiden Sensoren S1, S2 von "11"- "10" - "00" - "01", die nacheinander durchlaufen wird. Die elektronische Steuereinrichtung 47 überwacht diese Schaltfolge auf Richtigkeit. Weichen bei einer Betätigung des Schaltaktuators 1 ausgehend von der Schaltstellung für die Neutralstellung N in die Schaltstellung für die zweite Schaltstufe G2 die von den Sensoren S1, S2 gelieferten Schaltzustände von dieser Schaltfolge ab, wird dies von der elektronischen Steuereinrichtung 47 als Fehler erkannt.

Bei einer Betätigung des Schaltkolbens 4 ändert somit jeweils immer nur einer der beiden Sensoren S1 bzw. S2 seinen Schaltzustand. Nach einem Schaltzustand "11" kann nicht direkt ein Schaltzustand "00" folgen oder nach einem Schaltzustand "10" nicht direkt der Schaltzustand "01", wobei beide Sensoren S1, S2 gleichzeitig den Schaltzustand ändern.

Die elektronische Steuereinrichtung 47 ermittelt hierbei eine unrichtige Schaltfolge der Schaltzustände der Sensoren S1, S2 und erkennt als Fehler, wenn sich die Schaltzustände der beiden Sensoren S1, S2 gleichzeitig ändern.

Die elektronische Steuereinrichtung 47 überwacht hierbei aus den Schaltzuständen der Sensoren S1, S2 die Funktion des Schaltaktuators 1. Bei einem sich verändernden Schaltzustand eines Sensors S1 bzw. S2 berücksichtigt hierbei die elektronische Steuereinrichtung 47 den unmittelbar zeitlich vorausgegangenen Vorzustand der Sensoren S1, S2. Hierdurch ist mittels der elektronischen Steuereinrichtung 47 eine eindeutige Zuordnung der Stellung des Schaltkolbens 4 zu den Zuständen der beiden Sensoren S1, S2 möglich, wie anhand der Tabelle der Figur 5 näher erläutert wird.

Wie aus der Figur 5 im Zusammenhang mit dem Diagramm D4 der Figur 4 ersichtlich ist, befindet sich der Schaltkolben 4 in der Steuerstellung für die erste Schaltstufe G1, falls die Sensoren S1, S2 den Schaltzustand "10" aufweisen und die Sensoren S1, S2 den unmittelbar vorausgehenden Vorzustand "00" hatten. Weisen die Sensoren S1, S2 den Schaltzustand "10" und war deren Vorzustand "11" hat der Schaltkolben 4 die Schaltstellung für die Neutralstellung N verlassen und bewegt sich in Richtung der Schaltstellung für die zweite Schaltstellung G2.

Sofern die beiden Sensoren S1, S2 den Zustand "11" aufweisen, befindet sich der Schaltaktuator 1 und der Schaltkolben 4 in der Neutralstellung N, unabhängig von dem Vorzustand der Sensoren S1, S2.

Weisen die beiden Sensoren S1, S2 den Zustand "00" auf, befindet sich der Schaltkolben 4 entweder in dem von dem Hubbereich H2 oder dem Hubbereich H5 gebildeten Zwischenzustand. Sofern der Vorzustand der Sensoren S1, S2 "01" war, befindet sich der Schaltkolben 4 in dem Hubbereich H2 zwischen der Neutralstellung N und der Schaltstellung für die erste Schaltstufe G1. War der Vorzustand der Sensoren S1, S2 "10", befindet sich der Schaltkolben 4 in dem Hubbereich H5 zwischen der Neutralstellung N und der Schaltstellung für die zweite Schaltstufe G2.

Liefern die Sensoren S1, S2 den Schaltzustand "01" befindet sich der Schaltkolben 4 in der Schaltstellung für die zweite Schaltstufe G2, sofern die Sensoren S1, S2 als Vorzustand "00" hatten. War jedoch der Vorzustand der Sensoren "11", hat der Schaltkolben 4 die Schaltstellung für die Neutralstellung N verlassen und bewegt sich in Richtung der Schaltstellung für die erste Schaltstellung G1.

In den Diagrammen D1 bis D4 der Figur 4 ist weiterhin eine eingriffsfreie Zone Z der Verzahnungen des Schaltelements des Schaltgetriebes im Bereich um die Neutralstellung N dargestellt, in denen die Verzahnungen, die in den Schaltstufen G1, G2 des Schaltgetriebes in Eingriff stehen, außer Eingriff sind und sich somit das Schaltgetriebe im Leerlauf befindet. Die Zustandsänderung der ersten Sensors S1 bei Verlassen der ersten Schaltrampe 61 bei einer Betätigung des Schaltaktuators 1 von der Neutralstellung N in Richtung der ersten Schaltstufe G1 ist innerhalb der eingriffsfreien Zone Z angeordnet. Die Zustandsänderung der beiden Sensoren S1, S2 von dem Zustand "11" in den Zustand "01" findet somit in der eingriffsfreien Zone Z statt. Die Zustandsänderung des zweiten Sensors S2 bei Verlassen der zweiten Schaltrampe 62 und somit die Zustandsänderung von dem Zustand "01" in den Zustand "00" der Sensoren S1, S2 findet statt, nachdem die Verzahnungen für die erste Schaltstufe G1 in Eingriff gelangt sind. Die Zustandsänderung der zweiten Sensors S2 bei Verlassen der zweiten Schaltrampe 62 bei einer Betätigung des Schaltaktuators 1 von der Neutralstellung N in Richtung der zweiten Schaltstufe G2 ist innerhalb der eingriffsfreien Zone Z angeordnet. Die Zustandsänderung der beiden Sensoren S1, S2 von dem Zustand "11" in den Zustand "10" findet somit in der eingriffsfreien Zone Z statt. Die Zustandsänderung des ersten Sensors S1 bei Verlassen der ersten Schaltrampe 61 und somit die Zustandsänderung von dem Zustand "10" in den Zustand "00" der Sensoren S1, S2 findet statt, nachdem die Verzahnungen für die zweite Schaltstufe G2 in Eingriff gelangt sind.

Die Sensoren S1, S2 können als Näherungssensoren oder als Stößelschalter ausgebildet sein.

In dem dargestellten Ausführungsbeispiel sind die Schaltrampen 61, 62, 63 als nockenförmigen Erhebungen an dem Schaltkolben 4 ausgeführt, wobei die Sensoren S1, S2 den Zustand "1" aufweisen, wenn sie sich auf den Erhebungen befinden. Alternativ können die Schaltrampen 61, 62, 63 von nutförmigen Vertiefungen an dem Schaltkolben 4 ausgebildet werden, wobei die Sensoren S1, S2 den Zustand "1" aufweisen, wenn sie sich in den Vertiefungen befinden.

Die Schaltstellungserfassungsvorrichtung 60 weist einen einfachen und kostengünstigen Aufbau auf und ermöglicht ohne allzu hohe Anforderungen an die Fertigungsgenauigkeiten die Schaltstellungen des Schaltaktuators 1 eindeutig zu erkennen und zu ermitteln.

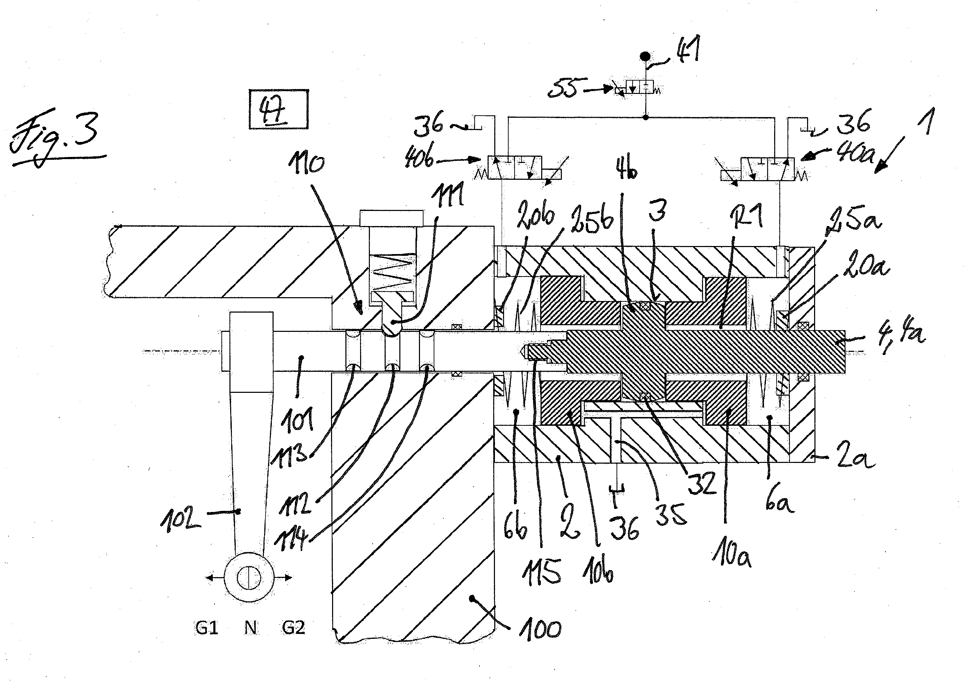

In der Figur 3 ist ein erfindungsgemäßer Schaltstellungsaktuator der Figuren 1 bzw. 2 dargestellt, der an ein Getriebegehäuse 100 eines Zwei-Gang-Schaltgetriebes angebaut ist. In der Figur 3 ist der Schaltaktuator 1 in der Schaltstellung für die Neutralstellung N dargestellt. Der Schaltaktuator 1 ist Bestandteil des Schaltgetriebes und an das Gehäuse 100 des Schaltgetriebes angebaut. Hierzu ist das Gehäuse 2 des Schaltaktuators 1 über einen nicht näher dargestellten Befestigungsflansch an dem Gehäuse 100 des Schaltgetriebes befestigt. Das Gehäuse 100 weist hierbei die Funktion eines Gehäusedeckels des Gehäuses 2 auf, um einen Steuerdruckraum 6a bzw. 6b des Schaltaktuators 1 zu verschließen. Ein axial verschiebbares Schaltelement 101, beispielsweise eine mit einer Schaltklaue 102 versehene Schaltstange, des Schaltgetriebes ist aus dem Getriebegehäuse 100 herausgeführt und mit dem Schaltkolben 4 des Schaltaktuators 1 verbunden. Der Schaltkolben 4 ist hierzu mit einer entsprechenden Befestigungsschnittstelle 115 zur Verbindung mit dem aus dem Getriebegehäuse 100 herausragenden Schaltelement 101 des Schaltgetriebes versehen.

In der Figur 3 ist weiterhin eine mechanischen Rasteinrichtung 110 dargestellt, mit der der Schaltkolben 4 in der Schaltstellung für die Neutralstellung N sowie in der Schaltstellung für die erste Schaltstufe G1 und in der Schaltstellung für die zweite Schaltstufe G2 arretierbar ist.

Die Rasteinrichtung 110 weist ein federbelastetes Rastelement 101, das in nutartige Vertiefungen 112, 113, 114 für die Schaltstellungen N, G1, G2 eingreift.

In der Figur 3 ist die Rasteinrichtung 110 an dem mit dem Schaltkolben 4 in Wirkverbindung stehenden Schaltelement 101 des Schaltgetriebes angeordnet. Es versteht sich, dass die Rasteinrichtung 110 alternativ an dem Schaltkolben 4 des Schaltaktuators 1 angeordnet werden kann.

Die Erfindung ist nicht auf die dargestellten Ausführungsbeispiele beschränkt.

Der Schaltkolben 4 der Figur 1 kann gemäß der Figur 2 mehrteilig ausgeführt werden. Zudem kann der Schaltkolben 4 der Figur 2 gemäß der Figur 1 einteilig ausgeführt werden. Die Rasteinrichtung 110 der Figur 3 kann an dem Schaltelement 101 des Schaltgetriebes oder an dem Schaltkolben 4 des Schaltaktuators 1 angeordnet werden. Die Schalterfassungsvorrichtung 60 kann - wie in der Figur 2 dargestellt ist - an dem Schaltkolben 4 des Schaltaktuators 1 angeordnet werden oder alternativ innerhalb des Schaltgetriebes an dem Schaltelement 101 des Schaltgetriebes angeordnet werden. Zudem kann das Freigabeventil 55, die Schalterfassungsvorrichtung 60 der Figur 2 und die die Rasteinrichtung 110 der Figur 3 bei allen Ausführungsformen des Schaltaktuators 1 vorgesehen werden. Hierbei sind Ausführungen möglich, bei denen nur das Freigabeventil 55, nur die Schalterfassungsvorrichtung 60 oder nur die Rasteinrichtung 110 vorgesehen sind. Zudem ist es möglich, das Freigabeventil 55, die Schalterfassungsvorrichtung 60 oder die Rasteinrichtung 110 in beliebigen Kombinationen an dem Schaltaktuator 1 vorzusehen.

## Patentansprüche

1. Hydraulischer Schaltaktuator (1) eines Schaltgetriebes, insbesondere eines Stillstandsschaltgetriebes, der Schaltstellungen für eine erste Schaltstufe (G1) des Schaltgetriebes, für eine zweite Schaltstufe (G2) des Schaltgetriebes und für eine eine Leerlaufstellung bildende Neutralstellung (N) des Schaltgetriebes aufweist, wobei der Schaltaktuator (1) einen in einer Gehäusebohrung (3) eines Gehäuses (2) längsverschiebbaren Schaltkolben (4) aufweist, der mit einer Kolbenstange (4a) und einem an der Kolbenstange (4a) angeordneten Kolbenabschnitt (4b) versehen ist, wobei an einer ersten Stirnseite des Kolbenabschnitts (4b) eine erste Steuerdruckfläche (5a) ausgebildet ist, die mit einem ersten Steuerdruckraum (6a) in Verbindung steht, wobei bei einem im ersten Steuerdruckraum (6a) anstehenden Steuerdruck der Schaltkolben (4) in die Schaltstellung für die erste Schaltstufe (G1) betätigbar ist, und an einer zweiten Stirnseite des Kolbenabschnitts (4b), die der ersten Stirnseite gegenüberliegt, eine zweite Steuerdruckfläche (5b) ausgebildet ist, die mit einem zweiten Steuerdruckraum (6b) in Verbindung steht, wobei bei einem im zweiten Steuerdruckraum (6b) anstehenden Steuerdruck der Schaltkolben (4) in die Schaltstellung für die zweite Schaltstufe (G2) betätigbar ist, wobei zwei Stufenkolben (10a, 10b) vorgesehen sind, die koaxial zu der Kolbenstange (4a) des Schaltkolbens (4) längsverschiebbar angeordnet sind und durch die die Kolbenstange (4a) des Schaltkolbens (4) hindurchgeführt ist, wobei der erste Stufenkolben (10a) in dem ersten Steuerdruckraum (6a) längsverschiebbar angeordnet ist und eine von dem im ersten Steuerdruckraum (6a) anstehenden Steuerdruck beaufschlagte Steuerfläche (12a) aufweist, wobei der erste Stufenkolben (10a) mit einer inneren Stirnseite (13a) mit der ersten Stirnseite (5a) des Kolbenabschnitts (4b) des Schaltkolbens (4) in Wirkverbindung bringbar ist, wobei der zweite Stufenkolben (10b) in dem zweiten Steuerdruckraum (6b) längsverschiebbar angeordnet ist und eine von dem im zweiten Steuerdruckraum (6b) anstehenden Steuerdruck beaufschlagte Steuerfläche (12b) aufweist, wobei der zweite Stufenkolben (10b) mit einer inneren Stirnseite (13b) mit der zweiten Stirnseite (5b) des Kolbenabschnitts (4b) des Schaltkolbens (4) in Wirkverbindung bringbar ist, wobei zwischen einem Innendurchmesser des ersten Stufenkolbens (10a) und dem Außendurchmesser der Kolbenstange (4a) ein Ringspalt (R1) ausgebildet ist, über den die erste Stirnseite (5a) des Kolbenabschnitts (4b) des Schaltkolbens (4) mit dem ersten Steuerdruckraum (6a) in Verbindung steht, und wobei zwischen einem Innendurchmesser des zweiten Stufenkolbens (10b) und dem Außendurchmesser der Kolbenstange (4a) ein Ringspalt (R2) ausgebildet ist, über den die zweite Stirnseite (5b) des Kolbenabschnitts (4b) des Schaltkolbens (4) mit dem zweiten Steuerdruckraum (6b) in Verbindung steht, wobei an dem Gehäuse (2) ein erster Anschlag (20a) für den ersten Stufenkolben (10a), der den maximalen Hub des Schaltkolbens (4) in der zweiten Schaltstufe (G2) begrenzt, und ein zweiter Anschlag (20b) für den zweiten Stufenkolben (10b) ausgebildet ist, der den maximalen Hub des Schaltkolbens (4) in der ersten Schaltstufe (G1) begrenzt, wobei die Gehäusebohrung (3) beiderseits des Kolbenabschnitts als Stufenbohrung ausgebildet ist, in der jeweils ein Stufenkolben (10a; 10b) längsverschiebbar angeordnet ist, wobei der Kolbenabschnitt (4b) des Schaltkolbens (4) in einem im Durchmesser verringerten mittleren Abschnitt der Stufenbohrung angeordnet ist, der erste Stufenkolben (10a) mit einem im Durchmesser verringerten inneren Abschnitt, an dem die innere Stirnseite (13a) ausgebildet ist, in dem mittleren Abschnitt der Stufenbohrung und mit einem im Durchmesser vergrößerten äußeren Abschnitt in einem im Durchmesser vergrößerten äußeren Abschnitt der Stufenbohrung angeordnet ist, der den ersten Steuerdruckraum (6a) bildet, der zweite Stufenkolben (10b) mit einem im Durchmesser verringerten inneren Abschnitt, an dem die innere Stirnseite (13b) ausgebildet ist, in dem mittleren Abschnitt der Stufenbohrung und mit einem im Durchmesser vergrößerten äußeren Abschnitt in einem im Durchmesser vergrößerten äußeren Abschnitt der Stufenbohrung angeordnet ist, der den zweiten Streuerdruckraum (6b) bildet, **dadurch gekennzeichnet, dass** das Schaltgetriebe ein mechanisches Zwei-Gang-Schaltgetriebe ist und der jeweilige Stufenkolben (10a, 10b) gegenüber dem mittleren Abschnitt der Stufenbohrung und gegenüber dem äußeren Abschnitt der Stufenbohrung abgedichtet ist.

2. Hydraulischer Schaltaktuator nach Anspruch 1, **dadurch gekennzeichnet, dass** an dem Gehäuse (2) für jeden Stufenkolben (10a; 10b) ein Anschlag (21a, 21b) für die Neutralstellung (N) ausgebildet ist, wobei bei einer Druckbeaufschlagung des ersten Steuerdruckraums (6a) mit einem Steuerdruck der erste Stufenkolben (10a) an den dem ersten Stufenkolben (10a) zugeordneten Anschlag (21a) für die Neutralstellung (N) betätigt wird und bei einer Druckbeaufschlagung des zweiten Steuerdruckraums (6b) mit einem Steuerdruck der zweite Stufenkolben (10b) an den dem zweiten Stufenkolben (10b) zugeordneten Anschlag (21b) für die Neutralstellung (N) betätigt wird.

3. Hydraulischer Schaltaktuator nach Anspruch 1 oder 2, **dadurch gekennzeichnet, dass** der erste Anschlag (20a), der den maximalen Hub des Schaltkolbens (4) in der zweiten Schaltstufe (G2) begrenzt, und der zweite Anschlag (20b), der den maximalen Hub des Schaltkolbens (4) in der ersten Schaltstufe (G1) begrenzt, anpassbar, insbesondere einstellbar, ist.

4. Hydraulischer Schaltaktuator nach Anspruch 2 oder 3, **dadurch gekennzeichnet, dass** der dem ersten Stufenkolben (10a) zugeordnete Anschlag (21a) für die Neutralstellung (N) zwischen einem Durchmesserabsatz der den ersten Stufenkolben (10a) aufnehmenden Stufenbohrung und einem Durchmesserabsatz des ersten Stufenkolbens (10a) gebildet ist und der dem zweiten Stufenkolben (10b) zugeordnete Anschlag (21b) für die Neutralstellung (N) zwischen einem Durchmesserabsatz der den zweiten Stufenkolben (10b) aufnehmenden Stufenbohrung und einem Durchmesserabsatz des zweiten Stufenkolbens (10b) gebildet ist.

5. Hydraulischer Schaltaktuator nach einem der Ansprüche 1 bis 4, **dadurch gekennzeichnet, dass** eine den ersten Stufenkolben (10a) in Richtung der ersten Stirnseite (5a) des Kolbenabschnitts (4b) des Schaltkolbens (4) beaufschlagende erste Federeinrichtung (25a) und eine den zweiten Stufenkolben (10b) in Richtung der zweiten Stirnseite (5b) des Kolbenabschnitts (4a) des Schaltkolbens (4) beaufschlagende zweite Federeinrichtung (25b) vorgesehen sind, wobei die Vorspannungen der Federeinrichtungen (25a, 25b) derart bemessen ist, dass die Stufenkolben (10a, 10b) in Anlage an dem Kolbenabschnitt (4b) des Schaltkolbens (4) bzw. dem zugeordneten Anschlag (21a, 21b) für die Neutralstellung (N) gehalten werden, die Federeinrichtungen (25a, 25b) den Schaltkolben (4) jedoch nicht in die Schaltstellung für die Neutralstellung (N) betätigen können.

6. Hydraulischer Schaltaktuator nach einem der Ansprüche 1 bis 5, **dadurch gekennzeichnet, dass** zur Abdichtung des jeweilige Stufenkolbens (10a, 10b) gegenüber dem mittleren Abschnitt der Stufenbohrung und gegenüber dem äußeren Abschnitt der Stufenbohrung Dichtungseinrichtungen (30a, 31a; 30b, 31b) vorgesehen sind.

7. Hydraulischer Schaltaktuator nach einem der Ansprüche 1 bis 5, **dadurch gekennzeichnet, dass** die Abdichtung des jeweilige Stufenkolbens (10a, 10b) gegenüber dem mittleren Abschnitt der Stufenbohrung und gegenüber dem äußeren Abschnitt der Stufenbohrung durch die Passungen zwischen dem Innendurchmesser der Stufenbohrung und dem Außendurchmesser des Stufenkolbens (10a; 10b) erfolgt.

8. Hydraulischer Schaltaktuator nach einem der Ansprüche 1 bis 7, **dadurch gekennzeichnet, dass** der Kolbenabschnitt (4b) gegenüber dem mittleren Abschnitt der Gehäusebohrung (3) abgedichtet ist.

9. Hydraulischer Schaltaktuator nach einem der Ansprüche 1 bis 8, **dadurch gekennzeichnet, dass** der Kolbenabschnitt (4b) einstückig an der Kolbenstange (4a) ausgebildet ist.

10. Hydraulischer Schaltaktuator nach einem der Ansprüche 1 bis 9, **dadurch gekennzeichnet, dass** der Kolbenabschnitt (4b) an der Kolbenstange (4a) befestigt und gegenüber der Kolbenstange (4a) abgedichtet ist.

11. Hydraulischer Schaltaktuator nach einem der Ansprüche 1 bis 10, **dadurch gekennzeichnet, dass** ein erster Ringraum (R3) zwischen dem Durchmesserabsatz der Stufenbohrung und dem Durchmesserabsatz des ersten Stufenkolbens (10a) und ein zweiter Ringraum (R4) zwischen dem Durchmesserabsatz der Stufenbohrung und dem Durchmesserabsatz des zweiten Stufenkolbens (10b) zu einem Behälter (36) entlastet sind.

12. Hydraulischer Schaltaktuator nach einem der Ansprüche 1 bis 11, **dadurch gekennzeichnet, dass** der erste Steuerdruckraum (6a) mittels eines ersten Steuerventils (40a) mit einem Steuerdruck beaufschlagbar oder von dem Steuerdruck entlastbar ist und der zweite Steuerdruckraum (6b) mittels eines zweiten Steuerventils (40b) mit einem Steuerdruck beaufschlagbar oder von dem Steuerdruck entlastbar ist, wobei das erste Steuerventil (40a) und das zweite Steuerventil (40b) jeweils als elektrisch betätigtes Schaltventil oder als elektrisch betätigtes Proportionalventil oder als elektrisch betätigtes Druckregelventil ausgebildet ist.

13. Hydraulischer Schaltaktuator nach Anspruch 12, **dadurch gekennzeichnet, dass** im nicht angesteuerten Zustand des Steuerventils (40a; 40b) der von dem Steuerventil (40a; 40b) angesteuerte Steuerdruckraum (6a; 6b) zu einem Behälter (36) entlastet ist und bei einer elektrischen Ansteuerung des jeweiligen Steuerventils (40a; 40b) ein in dem zugeordneten Steuerdruckraum (6a; 6b) anstehender Steuerdruck erzeugbar ist.

14. Hydraulischer Schaltaktuator nach Anspruch 12, **dadurch gekennzeichnet, dass** im nicht angesteuerten Zustand des Steuerventils (40a; 40b) ein in dem zugeordneten Steuerdruckraum (6a; 6b) anstehender Steuerdruck erzeugbar ist und bei einer elektrischen Ansteuerung des jeweiligen Steuerventils (40a; 40b) der von dem Steuerventil (40a; 40b) angesteuerte Steuerdruckraum (6a; b) zu einem Behälter (36) entlastbar ist.

15. Hydraulischer Schaltaktuator nach einem der Ansprüche 1 bis 14, **dadurch gekennzeichnet, dass** der Schaltkolben (4) oder ein mit dem Schaltkolben (4) in mechanischer Wirkverbindung stehendes und von dem Schaltkolben (4) betätigtes Schaltelement (101) des Getriebes mit einer mechanischen Rasteinrichtung (110) versehen ist, mit der der Schaltkolben (4) in der Stellung für die Neutralstellung (N) sowie in der Stellung für die erste Schaltstufe (G1) und in der Stellung für die zweite Schaltstufe (G2) arretierbar ist.

16. Hydraulischer Schaltaktuator nach Anspruch 15, **dadurch gekennzeichnet, dass** die Rasteinrichtung (110) ein federbelastetes Rastelement (111) aufweist, das in nutartige Vertiefungen (112, 113, 114) des Schaltkolbens (4) oder eines mit dem Schaltkolben (4) in mechanischer Wirkverbindung stehenden und von dem Schaltkolben (4) betätigten Schaltelements (101) des Getriebes eingreift.

17. Hydraulischer Schaltaktuator nach einem der Ansprüche 12 bis 16, **dadurch gekennzeichnet, dass** in einer Steuerdruckversorgungsleitung (41) der beiden Steuerventile (40a, 40b) ein elektrisch ansteuerbares Freigabeventil (55) angeordnet ist.

18. Hydraulischer Schaltaktuator nach einem der Ansprüche 1 bis 17, **dadurch gekennzeichnet, dass** zur Erfassung der Schaltstellungen (N, G1, G2) des Schaltaktuators (1) eine Schaltstellungserfassungsvorrichtung (60) vorgesehen ist, die zwei Sensoren (S1, S2) aufweist, die mit mehreren Schaltrampen (61, 62, 63) zusammenwirken, wobei in der Neutralstellung (N) des Schaltgetriebes beide Sensoren (S1, S2) betätigt sind und bei einer Hubbewegung des Schaltkolbens (4) jeweils nur einer der beiden Sensoren (S1, S2) seinen Schaltzustand ändert.

19. Hydraulischer Schaltaktuator nach Anspruch 18, **dadurch gekennzeichnet, dass** die Schaltstellungserfassungsvorrichtung (60) eine erste Schaltrampe (61) und eine zweite Schaltrampe (62) aufweist, die in axialer Richtung voneinander beabstandet sind, wobei zwischen der ersten Schaltrampe (61) und der zweiten Schaltrampe (62) eine dritte Schaltrampe (63) angeordnet ist, die sowohl von der ersten Schaltrampe (61) als auch von der zweiten Schaltrampe (62) in axialer Richtung beabstandet ist, wobei die beiden Sensoren (S1, S2) in axialer Richtung voneinander beabstandet angeordnet sind.

20. Hydraulischer Schaltaktuator nach Anspruch 19, **dadurch gekennzeichnet, dass** der erster Sensor (S1) über den Hubbereich (H) des Schaltkolbens (4) mit der ersten Schaltrampe (61) und der dritten Schaltrampe (63) zusammenwirkt und der zweite Sensor (S2) über den Hubbereich (H) des Schaltkolbens (4) mit der zweiten Schaltrampe (62) und der dritten Schaltrampe (63) zusammenwirkt.

21. Hydraulischer Schaltaktuator nach einem der Ansprüche 18 bis 20, **dadurch gekennzeichnet, dass** die Sensoren (S1, S2) an der entsprechenden Schaltrampe (61, 62, 63) betätigt sind und in den Bereichen zwischen und außerhalb der Schaltrampen (61, 62, 63) unbetätigt sind.

22. Hydraulischer Schaltaktuator nach einem der Ansprüche 19 bis 21, **dadurch gekennzeichnet, dass** in der Schaltstellung für die Neutralstellung (N) der erste Sensor (S1) von der ersten Schaltrampe (61) und der zweite Sensor (S2) von der zweiten Schaltrampe (62) betätigt ist.

23. Hydraulischer Schaltaktuator nach einem der Ansprüche 19 bis 22, **dadurch gekennzeichnet, dass** bei einer Betätigung des Schaltaktuators (1) ausgehend von der Schaltstellung für die Neutralstellung (N) in die Schaltstellung für die erste Schaltstufe (G1) in einem ersten, an die Neutralstellung (N) angrenzenden Hubbereich (H1) des Schaltkolbens (4) lediglich der erste Sensor (S1) den Schaltzustand ändert und von der ersten Schaltrampe (61) nicht mehr betätigt ist, in einem zweiten Hubbereich (H2) des Schaltkolbens (4), der sich an den ersten Hubbereich (H1) anschließt, lediglich der zweite Sensor (S2) den Schaltzustand ändert und von der zweiten Schaltrampe (62) nicht mehr betätigt ist, und in einem dritten Hubbereich (H3) bei Erreichen der Schaltstellung für die erste Schaltstufe (G1), der sich an den zweiten Hubbereich (H2) anschließt, lediglich der erste Sensor (S1) seinen Schaltzustand ändert und von der dritten Schaltrampe (63) betätigt ist.

24. Hydraulischer Schaltaktuator nach einem der Ansprüche 19 bis 23, **dadurch gekennzeichnet, dass** bei einer Betätigung des Schaltaktuators (1) ausgehend von der Schaltstellung für die Neutralstellung (N) in die Schaltstellung für die zweite Schaltstufe (G2) in einem ersten, an die Neutralstellung (N) angrenzenden Hubbereich (H4) des Schaltkolbens (4) lediglich der zweite Sensor (S2) den Schaltzustand ändert und von der zweiten Schaltrampe (62) nicht mehr betätigt ist, in einem zweiten Hubbereich (H5) des Schaltkolbens (4), der sich an den ersten Hubbereich (H4) anschließt, lediglich der erste Sensor (S1) den Schaltzustand ändert und von der ersten Schaltrampe (61) nicht mehr betätigt ist, und in einem dritten Hubbereich (H6) bei Erreichen der Schaltstellung für die zweite Schaltstufe (G2), der sich an den zweiten Hubbereich (H5) anschließt, lediglich der zweite Sensor (S2) seinen Schaltzustand ändert und von der dritten Schaltrampe (63) betätigt ist.

25. Hydraulischer Schaltaktuator einem der Ansprüche 18 bis 24, **dadurch gekennzeichnet, dass** die Sensoren (S1, S2) mit einer elektronischen Steuereinrichtung (47) in Wirkverbindung stehen, die aus den Schaltzuständen der Sensoren (S1, S2) die Funktion des Schaltaktuators (1) überwacht, wobei bei einem sich verändernden Schaltzustand eines Sensors (S1; S2) die elektronische Steuereinrichtung (47) den unmittelbar zeitlich vorausgegangenen Vorzustand der Sensoren (S1, S2) berücksichtigt.

26. Hydraulischer Schaltaktuator nach Anspruch 25, **dadurch gekennzeichnet, dass** die elektronische Steuereinrichtung (47) bei einem Schaltvorgang des Schaltgetriebes die Schaltfolge der Schaltzustände der Sensoren (S1, S2) ermittelt und überwacht.

27. Hydraulischer Schaltaktuator nach Anspruch 25 oder 26, **dadurch gekennzeichnet, dass** die elektronische Steuereinrichtung (47) eine unrichtige Schaltfolge der Schaltzustände der Sensoren (S1, S2) ermittelt und als Fehler erkennt, insbesondere eine Schaltfolge, bei der sich die Schaltzustände der beiden Sensoren (S1, S2) gleichzeitig ändern.

28. Hydraulischer Schaltaktuator nach einem der Ansprüche 18 bis 27, **dadurch gekennzeichnet, dass** die Sensoren (S1, S2) als Näherungssensoren oder als Stößelschalter ausgebildet sind.

29. Hydraulischer Schaltaktuator nach einem der Ansprüche 18 bis 28, **dadurch gekennzeichnet, dass** die Schaltrampen (61, 62, 63) von nockenförmigen Erhebungen oder nutförmigen Vertiefungen gebildet sind.

30. Hydraulischer Schaltaktuator nach einem der Ansprüche 18 bis 29, **dadurch gekennzeichnet, dass** die Schaltstellungserfassungsvorrichtung (60) an dem Schaltkolben (4) oder an einem ein mit dem Schaltkolben (4) in mechanischer Wirkverbindung stehenden und von dem Schaltkolben (4) betätigten Schaltelement (101) des Getriebes angeordnet ist.

31. Hydromechanisches Getriebe mit einem durch eine Hydropumpe antreibbaren Hydromotor eines hydrostatischen Stufenlosgetriebes, wobei der Hydromotor ein mechanisches Zwei-Gang-Schaltgetriebe antreibt, insbesondere ein Stillstandsschaltgetriebe, das mit einem hydraulischen Schaltaktuator (1) nach einem der vorangegangenen Ansprüche zwischen einer ersten Schaltstufe (G1), einer zweiten Schaltstufe (G2) und einer eine Leerlaufstellung bildenden Neutralstellung (N) schaltbar ist, wobei der Schaltaktuator (1) Bestandteil des Schaltgetriebes ist, wobei der Schaltaktuator (1) an ein Getriebegehäuse (100) des Schaltgetriebes angebaut ist und mit einer Befestigungsschnittstelle (115) zur Verbindung mit einem aus dem Getriebegehäuse (100) herausragenden Schaltelement (101) des Getriebes versehen ist.

## Claims

1. Hydraulic shifting actuator (1) of a gearbox, in particular a mechanically unsynchronized gearbox, which has shifting positions for a first shift stage (G1) of the gearbox, for a second shift stage (G2) of the gearbox and for a neutral position (N) of the gearbox, which neutral position (N) forms an idling position, wherein the shifting actuator (1) has a shift piston (4) which can be displaced longitudinally in a housing bore (3) of a housing (2) and is provided with a piston rod (4a) and a piston section (4b) which is arranged on the piston rod (4a), wherein a first control pressure face (5a) is configured on a first end side of the piston section (4b), which first control pressure face (5a) is connected to a first control pressure space (6a), wherein, in the case of a control pressure which prevails in the first control pressure space (6a), the shift piston (4) can be actuated into the shifting position for the first shift stage (G1), and a second control pressure face (5b) is configured on a second end side of the piston section (4b) which lies opposite the first end side, which second control pressure face (5b) is connected to a second control pressure space (6b), wherein, in the case of a control pressure which prevails in the second control pressure space (6b), the shift piston (4) can be actuated into the shifting position for the second shift stage (G2), wherein two step pistons (10a, 10b) are provided which are arranged such that they can be displaced longitudinally coaxially with respect to the piston rod (4a) of the shift piston (4), and through which step pistons (10a, 10b) the piston rod (4a) of the shift piston (4) is guided, wherein the first step piston (10a) is arranged such that it can be displaced longitudinally in the first control pressure space (6a) and has a control face (12a) which is loaded by the control pressure which prevails in the first control pressure space (6a), wherein the first step piston (10a) can be brought into an operative connection by way of an inner end side (13a) with the first end side (5a) of the piston section (4b) of the shift piston (4), wherein the second step piston (10b) is arranged such that it can be displaced longitudinally in the second control pressure space (6b) and has a control face (12b) which is loaded by the control pressure which prevails in the second control pressure space (6b), wherein the second step piston (10b) can be brought into an operative connection by way of an inner end side (13b) with the second end side (5b) of the piston section (4b) of the shift piston (4), wherein an annular gap (R1) is configured between an internal diameter of the first step piston (10a) and the external diameter of the piston rod (4a), via which annular gap (R1) the first end side (5a) of the piston section (4b) of the shift piston (4) is connected to the first control pressure space (6a), and wherein an annular gap (R2) is configured between an internal diameter of the second step piston (10b) and the external diameter of the piston rod (4a), via which annular gap (R2) the second end side (5b) of the piston section (4b) of the shift piston (4) is connected to the second control pressure space (6b), wherein a first stop (20a) for the first step piston (10a) which limits the maximum stroke of the shift piston (4) in the second shift stage (G2) and a second stop (20b) for the second step piston (10b) which limits the maximum stroke of the shift piston (4) in the first shift stage (G1) are configured on the housing (2), wherein the housing bore (3) is configured on both sides of the piston section as a stepped bore, in which in each case one step piston (10a; 10b) is arranged such that it can be displaced longitudinally, wherein the piston section (4b) of the shift piston (4) is arranged in a central section of reduced diameter of the stepped bore, the first step piston (10a) is arranged with an inner section of reduced diameter, on which the inner end side (13a) is configured, in the central section of the stepped bore and with an outer section of increased diameter in an outer section of increased diameter of the stepped bore, which outer section forms the first control pressure space (6a), and the second step piston (10b) is arranged with an inner section of reduced diameter, on which the inner end side (13b) is configured, in the central section of the stepped bore and with an outer section of increased diameter in an outer section of increased diameter of the stepped bore, which outer section forms the second control pressure space (6b), **characterized in that** the gearbox is a mechanical two-gear gearbox, and the respective step piston (10a, 10b) is sealed with respect to the central section of the stepped bore and with respect to the outer section of the stepped bore.

2. Hydraulic shifting actuator according to Claim 1, **characterized in that** a stop (21a, 21b) for the neutral position (N) is configured for each step piston (10a; 10b) on the housing (2), wherein the first step piston (10a) is actuated onto that stop (21a) for the neutral position (N) which is assigned to the first step piston (10a) in the case of pressurizing of the first control pressure space (6a) with a control pressure, and wherein the second step piston (10b) is actuated onto that stop (21b) for the neutral position (N) which is assigned to the second step piston (10b) in the case of pressurizing of the second control pressure space (6b) with a control pressure.

3. Hydraulic shifting actuator according to Claim 1 or 2, **characterized in that** the first stop (20a) which limits the maximum stroke of the shift piston (4) in the second shift stage (G2) and the second stop (20b) which limits the maximum stroke of the shift piston (4) in the first shift stage (G1) can be adapted, in particular can be set.

4. Hydraulic shifting actuator according to Claim 2 or 3, **characterized in that** that stop (21a) for the neutral position (N) which is assigned to the first step piston (10a) is formed between a diameter shoulder of the stepped bore which receives the first step piston (10a) and a diameter shoulder of the first step piston (10a), and that stop (21b) for the neutral position (N) which is assigned to the second step piston (10b) is formed between a diameter shoulder of the stepped bore which receives the second step piston (10b) and a diameter shoulder of the second step piston (10b).

5. Hydraulic shifting actuator according to one of Claims 1 to 4, **characterized in that** a first spring device (25a) which loads the first step piston (10a) in the direction of the first end side (5a) of the piston section (4b) of the shift piston (4) and a second spring device (25b) which loads the second step piston (10b) in the direction of the second end side (5b) of the piston section (4a) of the step piston (4) are provided, wherein the prestresses of the spring devices (25a, 25b) are dimensioned in such a way that the step pistons (10a, 10b) are held in contact with the piston section (4b) of the shift piston (4) or the associated stop (21a, 21b) for the neutral position (N), but the spring devices (25a, 25b) cannot actuate the shift piston (4) into the shifting position for the neutral position (N).

6. Hydraulic shifting actuator according to one of Claims 1 to 5, **characterized in that** seal devices (30a, 31a; 30b, 31b) are provided for sealing the respective step piston (10a, 10b) with respect to the central section of the stepped bore and with respect to the outer section of the stepped bore.

7. Hydraulic shifting actuator according to one of Claims 1 to 5, **characterized in that** the sealing of the respective step piston (10a, 10b) with respect to the central section of the stepped bore and with respect to the outer section of the stepped bore takes place by way of the fits between the internal diameter of the stepped bore and the external diameter of the step piston (10a; 10b).

8. Hydraulic shifting actuator according to one of Claims 1 to 7, **characterized in that** the piston section (4b) is sealed with respect to the central section of the housing bore (3).

9. Hydraulic shifting actuator according to one of Claims 1 to 8, **characterized in that** the piston section (4b) is configured in one piece on the piston rod (4a).

10. Hydraulic shifting actuator according to one of Claims 1 to 9, **characterized in that** the piston section (4b) is fastened to the piston rod (4a) and is sealed with respect to the piston rod (4a).

11. Hydraulic shifting actuator according to one of Claims 1 to 10, **characterized in that** a first annular space (R3) between the diameter shoulder of the stepped bore and the diameter shoulder of the first step piston (10a) and a second annular space (R4) between the diameter shoulder of the stepped bore and the diameter shoulder of the second step piston (10b) are relieved to a vessel (36).

12. Hydraulic shifting actuator according to one of Claims 1 to 11, **characterized in that** the first control pressure space (6a) can be loaded with a control pressure or can be relieved of the control pressure by means of a first control valve (40a), and the second control pressure space (6b) can be loaded with a control pressure or can be relieved of the control pressure by means of a second control valve (40b), wherein the first control valve (40a) and the second control valve (40b) are configured in each case as an electrically actuated switching valve or as an electrically actuated proportional valve or as an electrically actuated pressure control valve.

13. Hydraulic shifting actuator according to Claim 12, **characterized in that** the control pressure space (6a; 6b) which is actuated by the control valve (40a; 40b) is relieved to a vessel (36) in the non-actuated state of the control valve (40a; 40b), and a control pressure which prevails in the associated control pressure space (6a; 6b) can be generated in the case of an electric actuation of the respective control valve (40a; 40b).

14. Hydraulic shifting actuator according to Claim 12, **characterized in that** a control pressure which prevails in the associated control pressure space (6a; 6b) can be generated in the non-actuated state of the control valve (40a; 40b), and the control pressure space (6a; b) which is actuated by the control valve (40a; 40b) can be relieved to a vessel (36) in the case of an electric actuation of the respective control valve (40a; 40b).

15. Hydraulic shifting actuator according to one of Claims 1 to 14, **characterized in that** the shift piston (4) or a shifting element (101) of the transmission which is operatively connected mechanically to the shift piston (4) and is actuated by the shift piston (4) is provided with a mechanical latching device (110), by way of which the step piston (4) can be locked in the position for the neutral position (N) and in the position for the first shift stage (G1) and in the position for the second shift stage (G2).

16. Hydraulic shifting actuator according to Claim 15, **characterized in that** the latching device (110) has a spring-loaded latching element (111) which engages into groove-like depressions (112, 113, 114) of the shift piston (4) or of a shifting element (101) of the transmission which is operatively connected mechanically to the shift piston (4) and is actuated by the shift piston (4).

17. Hydraulic shifting actuator according to one of Claims 12 to 16, **characterized in that** an electrically actuable release valve (55) is arranged in a control pressure supply line (41) of the two control valves (40a, 40b).

18. Hydraulic shifting actuator according to one of Claims 1 to 17, **characterized in that** a shifting position detection apparatus (60) is provided to detect the shifting positions (N, G1, G2) of the shifting actuator (1), which shifting position detection apparatus (60) has two sensors (S1, S2) which interact with a plurality of shifting ramps (61, 62, 63), wherein the two sensors (S1, S2) are actuated in the neutral position (N) of the gearbox, and in each case only one of the two sensors (S1, S2) changes its shifting state in the case of a reciprocating movement of the shift piston (4).

19. Hydraulic shifting actuator according to Claim 18, **characterized in that** the shifting position detection apparatus (60) has a first shifting ramp (61) and a second shifting ramp (62) which are spaced apart from one another in the axial direction, wherein a third shifting ramp (63) is arranged between the first shifting ramp (61) and the second shifting ramp (62), which third shifting ramp (63) is spaced apart in the axial direction both from the first shifting ramp (61) and from the second shifting ramp (62), wherein the two sensors (S1, S2) are arranged spaced apart from one another in the axial direction.

20. Hydraulic shifting actuator according to Claim 19, **characterized in that** the first sensor (S1) interacts over the stroke region (H) of the shift piston (4) with the first shifting ramp (61) and the third shifting ramp (63), and the second sensor (S2) interacts over the stroke region (H) of the shift piston (4) with the second shifting ramp (62) and the third shifting ramp (63).

21. Hydraulic shifting actuator according to one of Claims 18 to 20, **characterized in that** the sensors (S1, S2) are actuated on the corresponding shifting ramp (61, 62, 63) and are non-actuated in the regions between and outside the shifting ramps (61, 62, 63).

22. Hydraulic shifting actuator according to one of Claims 19 to 21, **characterized in that**, in the shifting position for the neutral position (N), the first sensor (S1) is actuated by the first shifting ramp (61) and the second sensor (S2) is actuated by the second shifting ramp (62).

23. Hydraulic shifting actuator according to one of Claims 19 to 22, **characterized in that** merely the first sensor (S1) changes the shifting state and is no longer actuated by the first shifting ramp (61) in the case of an actuation of the shifting actuator (1) starting from the shifting position for the neutral position (N) into the shifting position for the first shift stage (G1) in a first stroke region (H1) of the shift piston (4), which first stroke region (H1) adjoins the neutral position (N), merely the second sensor (S2) changes the shifting state and is no longer actuated by the second shifting ramp (62) in a second stroke region (H2) of the shift piston (4), which second stroke region (H2) adjoins the first stroke region (H1), and merely the first sensor (S1) changes its shifting state and is actuated by the third shifting ramp (63) in a third stroke region (H3) when the shifting position for the first shift stage (G1) is reached, which third stroke region (H3) adjoins the second stroke region (H2).

24. Hydraulic shifting actuator according to one of Claims 19 to 23, **characterized in that** merely the second sensor (S2) changes the shifting state and is no longer actuated by the second shifting ramp (62) in the case of an actuation of the shifting actuator (1) starting from the shifting position for the neutral position (N) into the shifting position for the second shift stage (G2) in a first stroke region (H4) of the shift piston (4), which first stroke region (H4) adjoins the neutral position (N), merely the first sensor (S1) changes the shifting state and is no longer actuated by the first shifting ramp (61) in a second stroke region (H5) of the shift piston (4), which second stroke region (H5) adjoins the first stroke region (H4), and merely the second sensor (S2) changes its shifting state and is actuated by the third shifting ramp (63) in a third stroke region (H6) when the shifting position for the second shift stage (G2) is reached, which third stroke region (H6) adjoins the second stroke region (H5).

25. Hydraulic shifting actuator according to one of Claims 18 to 24, **characterized in that** the sensors (S1, S2) are operatively connected to an electronic control device (47) which monitors the function of the shifting actuator (1) from the shifting states of the sensors (S1, S2), wherein the electronic control device (47) takes the immediately temporally preceding preliminary state of the sensors (S1, S2) into consideration in the case of a changing shifting state of a sensor (S1; S2).

26. Hydraulic shifting actuator according to Claim 25, **characterized in that** the electronic control device (47) determines and monitors the shifting sequence of the shifting states of the sensors (S1, S2) in the case of a shifting operation of the gearbox.

27. Hydraulic shifting actuator according to Claim 25 or 26, **characterized in that** the electronic control device (47) determines an incorrect shifting sequence of the shifting states of the sensors (S1, S2) and recognizes it as an error, in particular a shifting sequence, in the case of which the shifting states of the two sensors (S1, S2) change at the same time.

28. Hydraulic shifting actuator according to one of Claims 18 to 27, **characterized in that** the sensors (S1, S2) are configured as proximity sensors or as plunger switches.

29. Hydraulic shifting actuator according to one of Claims 18 to 28, **characterized in that** the shifting ramps (61, 62, 63) are formed by cam-shaped elevations or groove-shaped depressions.

30. Hydraulic shifting actuator according to one of Claims 18 to 29, **characterized in that** the shifting position detection apparatus (60) is arranged on the shift piston (4) or on a shift element (101) of the transmission, which shift element (101) is operatively connected mechanically to the shift piston (4) and is actuated by the shift piston (4).

31. Hydromechanical gearbox having a hydraulic motor of a hydrostatic continuously variable transmission, which hydraulic motor can be driven by way of a hydraulic pump, wherein the hydraulic motor drives a mechanical two-gear gearbox, in particular a mechanically unsynchronized gearbox, which can be shifted by way of a hydraulic shifting actuator (1) according to one of the preceding claims between a first shift stage (G1), a second shift stage (G2) and a neutral position (N) which forms an idling position, wherein the shifting actuator (1) is a constituent part of the gearbox, wherein the shifting actuator (1) is attached to a gearbox housing (100) of the gearbox and is provided with a fastening interface (115) for connecting to a shifting element (101) of the gearbox, which shifting element (101) protrudes out of the gearbox housing (100).

## Revendications

1. Actionneur de passage de vitesses hydraulique (1) d'une boîte de vitesses, notamment d'une boîte de vitesse à l'arrêt, qui comporte des positions de passage pour un premier rapport de vitesse (G1) de la boîte de vitesses, pour un deuxième rapport de vitesse (G2) de la boîte de vitesses et pour une position neutre (N) générant une position au ralenti de la boîte de vitesses, l'actionneur de passage de vitesses (1) comportant un piston sélecteur (4) déplaçable en longueur dans un perçage de boîtier (3) d'un boîtier (2), qui est muni d'une barre de piston (4a) et d'un tronçon de piston (4b) placé sur la barre de piston (4a), sur une première face frontale du tronçon de piston (4b) étant conçue une première surface de pression de commande (5a) qui est en liaison avec un premier espace de pression de commande (6a), lorsqu'une pression de commande est en suspens dans le premier espace de pression de commande (6a), le piston sélecteur (4) étant manoeuvrable dans la position de passage pour le premier rapport de vitesse (G1) et sur une deuxième face frontale du tronçon de piston (4b), située en regard de la première face frontale étant conçue une deuxième surface de pression de commande (5b) qui est en liaison avec un deuxième espace de pression de commande (6b), lorsqu'une pression de commande est en suspens dans le deuxième espace de pression de commande (6b), le piston sélecteur (4) étant manoeuvrable dans la position de passage pour le deuxième rapport de vitesse (G2), deux pistons étagés (10a, 10b) étant prévus qui sont placés en étant déplaçables en longueur de manière coaxiale à la barre de piston (4a) du piston sélecteur (4) et à travers lesquels la barre de piston (4a) du piston sélecteur (4) est insérée, le premier piston étagé (10a) étant placé en étant déplaçable en longueur dans le premier espace de pression de commande (6a) et comportant une surface de commande (12a) soumise à la pression de commande en suspens dans le premier espace de pression de commande (6a), par une face frontale (13a) intérieure, le premier piston étagé (10a) pouvant être amené en liaison active avec la première face frontale (5a) du tronçon de piston (4b) du piston sélecteur (4), le deuxième piston étagé (10b) étant placé en étant déplaçable en longueur dans le deuxième espace de pression de commande (6b) et comportant une surface de commande (12b) soumise à la pression de commande en suspens dans le deuxième espace de pression de commande (6b), par une face frontale (13b) intérieure, le deuxième piston étagé (10b) pouvant être amené en liaison active avec la deuxième face frontale (5b) du tronçon de piston (4b) du piston sélecteur (4), entre un diamètre intérieur du premier piston étagé (10a) et le diamètre extérieur de la barre de piston (4a) étant conçue une fente annulaire (R1) par l'intermédiaire de laquelle la première face frontale (5a) du tronçon de piston (4b) du piston sélecteur (4) est en liaison avec le premier espace de pression de commande (6a) et entre un diamètre intérieur du deuxième piston étagé (10b) et le diamètre extérieur de la barre de piston (4a) étant conçue une fente annulaire (R2), par l'intermédiaire de laquelle la deuxième face frontale (5b) du tronçon de piston (4b) du piston sélecteur (4) est en liaison avec le deuxième espace de pression de commande (6b), sur le boîtier (2) étant conçues une première butée (20a) pour le premier piston étagé (10a), qui limite la levée maximale du piston sélecteur (4) dans le deuxième rapport de vitesse (G2) et une deuxième butée (20b) pour le deuxième piston étagé (10b), qui limite la levée maximale du piston sélecteur (4) dans le premier rapport de vitesse (G1), le perçage de boîtier (3) étant conçu de part et d'autre du tronçon de piston sous la forme d'un perçage étagé, dans lequel un piston étagé (10a ; 10b) est placé respectivement de manière déplaçable en longueur, le tronçon de piston (4b) du piston sélecteur (4) étant placé dans un segment médian du perçage étagé à diamètre réduit, le premier piston étagé (10a) étant placé par un tronçon intérieur à diamètre réduit sur lequel est conçue la face frontale (13a) dans le segment médian du perçage étagé et par un tronçon extérieur à diamètre agrandi dans un segment extérieur à diamètre agrandi du perçage étagé qui forme le premier espace de pression de commande (6a), le deuxième piston étagé (10b) étant placé par un tronçon intérieur à diamètre réduit sur lequel est conçue la face frontale (13b) intérieure dans le segment médian du perçage étagé et par un tronçon extérieur à diamètre agrandi dans un segment extérieur à diamètre agrandi du perçage étagé qui forme le deuxième espace de pression de commande (6b), **caractérisé en ce que** la boîte de vitesses est une boîte de vitesses mécanique à deux vitesses et le piston étagé (10a, 10b) respectif est étanchéifié par rapport au segment médian du perçage étagé et par rapport au segment extérieur du perçage étagé.

2. Actionneur de passage de vitesses hydraulique selon la revendication 1, **caractérisé en ce que** sur le boîtier (2) est conçue pour chaque piston étagé (10a ; 10b) une butée (21a, 21b) pour la position neutre (N), lorsque le premier espace de pression de commande (6a) est soumis à une pression de commande, le premier piston étagé (10a) étant manoeuvré sur la butée (21a) associée au premier piston étagé (10a) pour la position neutre (N) et lorsque le deuxième espace de pression de commande (6b) est soumis à une pression de commande, le deuxième piston étagé (10b) étant manoeuvré sur la butée (21b) associée au deuxième piston étagé (10b) pour la position neutre (N).

3. Actionneur de passage de vitesses hydraulique selon la revendication 1 ou 2, **caractérisé en ce que** la première butée (20a) qui limite la levée maximale du piston sélecteur (4) dans le deuxième rapport de vitesse (G2) et la deuxième butée (20b), qui limite la levée maximale du piston sélecteur (4) dans le premier rapport de vitesse (G1) sont adaptables, notamment ajustables.

4. Actionneur de passage de vitesses hydraulique selon la revendication 2 ou 3, **caractérisé en ce que** la butée (21a) associée au premier piston étagé (10a) pour la position neutre (N) est créée entre un talon diamétral du perçage étagé recevant le premier piston étagé (10a) et un talon diamétral du premier piston étagé (10a) et **en ce que** la butée (21b) associée au deuxième piston étagé (10b) pour la position neutre (N) est créée entre un talon diamétral du perçage étagé recevant le deuxième piston étagé (10b) et un talon diamétral du deuxième piston étagé (10b).

5. Actionneur de passage de vitesses hydraulique selon l'une quelconque des revendications 1 à 4, **caractérisé en ce qu'**il est prévu un premier système à ressort (25a) auquel est soumis le premier piston étagé (10a) dans la direction de la première face frontale (5a) du tronçon de piston (4b) du piston sélecteur (4) et un deuxième système à ressort (25b) auquel est soumis le deuxième piston étagé (10b) dans la direction de la deuxième face frontale (5b) du tronçon de piston (4a) du piston sélecteur (4), les précontraintes des systèmes à ressort (25a, 25b) étant dimensionnées de telle sorte que les pistons étagés (10a, 10b) soient maintenus en appui sur le tronçon de piston (4b) du piston sélecteur (4) ou sur la butée (21a, 21b) associée pour la position neutre (N), les systèmes à ressort (25a, 25b) ne pouvant pourtant pas manoeuvrer le piston sélecteur (4) dans la position de passage pour la position neutre (N).

6. Actionneur de passage de vitesses hydraulique selon l'une quelconque des revendications 1 à 5, **caractérisé en ce que** des systèmes d'étanchéité (30a, 31a ; 30b, 31b) sont prévus pour assurer l'étanchéité du piston étagé (10a, 10b) respectif par rapport au segment médian du perçage étagé et par rapport au segment extérieur du perçage étagé.

7. Actionneur de passage de vitesses hydraulique selon l'une quelconque des revendications 1 à 5, **caractérisé en ce que** l'étanchéité du piston étagé (10a, 10b) respectif par rapport au segment médian du perçage étagé et par rapport au segment extérieur du perçage étagé s'effectue à l'aide des ajustements entre le diamètre intérieur du perçage étagé et le diamètre extérieur du piston étagé (10a ; 10b).

8. Actionneur de passage de vitesses hydraulique selon l'une quelconque des revendications 1 à 7, **caractérisé en ce que** le tronçon de piston (4b) est étanchéifié par rapport au segment médian du perçage de boîtier (3).

9. Actionneur de passage de vitesses hydraulique selon l'une quelconque des revendications 1 à 8, **caractérisé en ce que** le tronçon de piston (4b) est conçu en monobloc sur la barre de piston (4a).

10. Actionneur de passage de vitesses hydraulique selon l'une quelconque des revendications 1 à 9, **caractérisé en ce que** le tronçon de piston (4b) est fixé sur la barre de piston (4a) et étanchéifié par rapport à la barre de piston (4a).

11. Actionneur de passage de vitesses hydraulique selon l'une quelconque des revendications 1 à 10, **caractérisé en ce qu'**un premier espace annulaire (R3) entre le talon diamétral du perçage étagé et le talon diamétral du premier piston étagé (10a) et un deuxième espace annulaire (R4) entre le talon diamétral du perçage étagé et le talon diamétral du deuxième piston étagé (10b) sont déchargés vers un réservoir (36).

12. Actionneur de passage de vitesses hydraulique selon l'une quelconque des revendications 1 à 11, **caractérisé en ce que** le premier espace de pression de commande (6a) est susceptible d'être soumis à une pression de commande ou est susceptible d'être déchargé de la pression de commande au moyen d'une première soupape de commande (40a) et le deuxième espace de pression de commande (6b) est susceptible d'être soumis à une pression de commande ou est susceptible d'être déchargé de la pression de commande au moyen d'une deuxième soupape de commande (40b), la première soupape de commande (40a) et la deuxième soupape de commande (40b) étant conçues respectivement sous la forme d'une soupape de commutation à actionnement électrique ou d'une soupape proportionnelle à actionnement électrique ou d'un régulateur de pression à actionnement électrique.

13. Actionneur de passage de vitesses hydraulique selon la revendication 12, **caractérisé en ce que** dans l'état non activé de la soupape de commande (40a ; 40b), l'espace de pression de commande (6a ; 6b) activé par la soupape de commande (40a ; 40b) est déchargé vers un réservoir (36) et lors d'une activation électrique de la soupape de commande (40a ; 40b) respective, une pression de commande en suspens dans l'espace de pression de commande (6a ; 6b) associé est susceptible d'être générée.

14. Actionneur de passage de vitesses hydraulique selon la revendication 12, **caractérisé en ce que** dans l'état non activé de la soupape de commande (40a ; 40b), une pression de commande en suspens dans l'espace de pression de commande (6a ; 6b) associé est susceptible d'être générée et lors d'une activation électrique de la soupape de commande (40a ; 40b) respective, l'espace de pression de commande (6a ; b) activé par la soupape de commande (40a; 40b) est susceptible d'être déchargé vers un réservoir (36).

15. Actionneur de passage de vitesses hydraulique selon l'une quelconque des revendications 1 à 14, **caractérisé en ce que** le piston sélecteur (4) ou un élément de passage (101) de la boîte qui est en liaison mécanique active avec le piston sélecteur (4) et qui est manoeuvré par le piston sélecteur (4) est muni d'un système d'enclenchement mécanique (110), à l'aide duquel le piston sélecteur (4) est susceptible d'être bloqué dans la position correspondant à la position neutre (N), ainsi que dans la position correspondant au premier rapport de vitesse (G1) et dans la position correspondant au deuxième rapport de vitesse (G2).

16. Actionneur de passage de vitesses hydraulique selon la revendication 15, **caractérisé en ce que** le système d'enclenchement (110) comporte un élément d'enclenchement (111) soumis à un ressort, qui s'engage dans des creux (112, 113, 114) en forme de rainures du piston sélecteur (4) ou dans un élément de passage (101) de la boîte qui est en liaison mécanique active avec le piston sélecteur (4) et qui est manoeuvré par le piston sélecteur (4).

17. Actionneur de passage de vitesses hydraulique selon l'une quelconque des revendications 12 à 16, **caractérisé en ce que** dans un conduit d'alimentation de la pression de commande (41) des deux soupapes de commande (40a, 40b) est placée une soupape de libération (55) à activation électrique.

18. Actionneur de passage de vitesses hydraulique selon l'une quelconque des revendications 1 à 17, **caractérisé en ce que** pour la détection des positions de passage (N, G1, G2) de l'actionneur de passage de vitesses (1), il est prévu un dispositif de détection de la position de passage (60) qui comporte deux capteurs (S1, S2) qui coopèrent avec plusieurs rampes de passage (61, 62, 63), dans la position neutre (N) de la boîte de vitesses, les deux capteurs (S1, S2) étant actionnés et lors d'un déplacement en levée du piston sélecteur (4), chaque fois seulement l'un des deux capteurs (S1, S2) modifiant son état de commutation.

19. Actionneur de passage de vitesses hydraulique selon la revendication 18, **caractérisé en ce que** le dispositif de détection de la position de passage (60) comporte une première rampe de passage (61) et une deuxième rampe de passage (62) qui sont écartées l'une de l'autre dans la direction axiale, entre la première rampe de passage (61) et la deuxième rampe de passage (62) étant placée une troisième rampe de passage (63) qui est écartée en direction axiale de la première rampe de passage (61) aussi bien que de la deuxième rampe de passage (62), les deux capteurs (S1, S2) étant placés en étant écartés l'un de l'autre en direction axiale.

20. Actionneur de passage de vitesses hydraulique selon la revendication 19, **caractérisé en ce que** le premier capteur (S1) coopère sur la plage de levée (H) du piston sélecteur (4) avec la première rampe de passage (61) et la troisième rampe de passage (63) et le deuxième capteur (S2) coopère sur la plage de levée (H) du piston sélecteur (4) avec la deuxième rampe de passage (62) et la troisième rampe de passage (63).

21. Actionneur de passage de vitesses hydraulique selon l'une quelconque des revendications 18 à 20, **caractérisé en ce que** les capteurs (S1, S2) sont actionnés sur la rampe de passage (61, 62, 63) correspondante et ne sont pas actionnés dans les zones situées entre et à l'extérieur des rampes de passage (61, 62, 63).

22. Actionneur de passage de vitesses hydraulique selon l'une quelconque des revendications 19 à 21, **caractérisé en ce que** dans la position de passage pour la position neutre (N), le premier capteur (S1) est actionné par la première rampe de passage (61) et le deuxième capteur (S2) est actionné par la deuxième rampe de passage (62).

23. Actionneur de passage de vitesses hydraulique selon l'une quelconque des revendications 19 à 22, caractérisé en ce lors d'une manoeuvre de l'actionneur de passage de vitesses (1), en partant de la position de passage pour la position neutre (N) dans la position de passage pour le premier rapport de vitesse (G1), dans une première plage de levée (H1) adjacente à la position neutre (N) du piston sélecteur (4), seul le premier capteur (S1) modifie l'état de commutation et n'est plus actionné par la première rampe de passage (61), dans une deuxième plage de levée (H2) du piston sélecteur (4), qui fait suite à la première plage de levée (H1), seul le deuxième capteur (S2) modifie l'état de commutation et n'est plus actionné par la deuxième rampe de passage (62) et dans une troisième plage de levée (H3), à l'atteinte de la position de passage pour le premier rapport de vitesse (G1) qui fait suite à la deuxième plage de levée (H2), seul le premier capteur (S1) modifie son état de commutation et est actionné par la troisième rampe de passage (63).

24. Actionneur de passage de vitesses hydraulique selon l'une quelconque des revendications 19 à 23, **caractérisé en ce que** lors d'une manoeuvre de l'actionneur de passage de vitesses (1), en partant de la position de passage pour la position neutre (N) dans la position de passage pour le deuxième rapport de vitesse (G2), dans une première plage de levée (H4) adjacente à la position neutre (N) du piston sélecteur (4), seul le deuxième capteur (S2) modifie l'état de commutation et n'est plus actionné par la deuxième rampe de passage (62), dans une deuxième plage de levée (H5) du piston sélecteur (4), qui fait suite à la première plage de levée (H4), seul le premier capteur (S1) modifie l'état de commutation et n'est plus actionné par la première rampe de passage (61) et dans une troisième plage de levée (H6), à l'atteinte de la position de passage pour le deuxième rapport de vitesse (G2), qui fait suite à la deuxième plage de levée (H5), seul le deuxième capteur (S2) modifie son état de commutation et est actionné par la troisième rampe de passage (63).

25. Actionneur de passage de vitesses hydraulique selon l'une quelconque des revendications 18 à 24, **caractérisé en ce que** les capteurs (S1, S2) sont en liaison active avec un système de commande électronique (47), qui à partir des états de commutation des capteurs (S1, S2) supervise la fonction de l'actionneur de passage de vitesses (1), lorsque l'état de de commutation d'un capteur (S1 ; S2) varie, le système de commande (47) électronique tenant compte de l'état antérieur directement précédent dans le temps des capteurs (S1, S2).

26. Actionneur de passage de vitesses hydraulique selon la revendication 25, **caractérisé en ce que** lors d'un processus de passage de la boîte de vitesses, le système de commande électronique (47) détermine et supervise la séquence de commutation des états de commutation des capteurs (S1, S2).

27. Actionneur de passage de vitesses hydraulique selon la revendication 25 ou 26, **caractérisé en ce que** le système de commande électronique (47) détermine et identifie comme une erreur une séquence de commutation erronée des états de commutation des capteurs (S1, S2), notamment une séquence de commutation lors de laquelle les états de commutation des deux capteurs (S1, S2) se modifient simultanément.

28. Actionneur de passage de vitesses hydraulique selon l'une quelconque des revendications 18 à 27, **caractérisé en ce que** les capteurs (S1, S2) sont conçus sous la forme de capteurs de proximité ou de commutateurs à poussoir.

29. Actionneur de passage de vitesses hydraulique selon l'une quelconque des revendications 18 à 28, **caractérisé en ce que** les rampes de passage (61, 62, 63) sont formées par des élévations en forme de cames ou par des creux en forme de rainures.

30. Actionneur de passage de vitesses hydraulique selon l'une quelconque des revendications 18 à 29, **caractérisé en ce que** le dispositif de détection de la position de passage (60) est placé sur le piston sélecteur (4) ou sur un élément de passage (101) de la boîte, qui est en liaison mécanique active avec le piston sélecteur (4) et manoeuvré par le piston sélecteur (4).

31. Boîte de vitesses hydromécanique, pourvue d'un moteur hydraulique d'une boîte de vitesses à variation continue susceptible d'être entraîné par une pompe hydraulique, le moteur hydraulique entraînant une boîte de vitesses mécanique à deux vitesses, notamment une boîte de vitesses à l'arrêt, qui est susceptible d'être passée à l'aide d'un actionneur de passage de vitesses (1) selon l'une quelconque des revendications précédentes dans un premier rapport de vitesse (G1), un deuxième rapport de vitesse (G2) et dans une position neutre (N) générant une position au ralenti, l'actionneur de passage de vitesses (1) étant un composant de la boîte de vitesses, l'actionneur de passage de vitesses (1) étant monté sur un boîtier de boîte de vitesses (100) de la boîte de vitesses et étant muni d'une interface de fixation (115) destinée à être reliée avec un élément de passage (101) de la boîte de vitesse, saillant hors du boîter de la boîte de vitesses (100).
